(19) Europäisches Patentamt
European Patent Office
Office européen des brevets

(11) **EP 2 193 266 B1**

(12) **EUROPEAN PATENT SPECIFICATION**

(45) Date of publication and mention
of the grant of the patent:
**12.06.2013 Bulletin 2013/24**

(51) Int Cl.:
*F02D 35/02* (2006.01)      *F02D 41/00* (2006.01)
*F02D 41/34* (2006.01)

(21) Application number: **08807139.4**

(22) Date of filing: **24.09.2008**

(86) International application number:
**PCT/IB2008/002479**

(87) International publication number:
**WO 2009/040633 (02.04.2009 Gazette 2009/14)**

(54) **CONTROL APPARATUS AND CONTROL METHOD FOR INTERNAL COMBUSTION ENGINE**

STEUERVORRICHTUNG UND STEUERVERFAHREN FÜR EINEN VERBRENNUNGSMOTOR

APPAREIL DE COMMANDE ET PROCÉDÉ DE COMMANDE POUR UN MOTEUR À COMBUSTION INTERNE

(84) Designated Contracting States:
**DE FR GB**

(30) Priority: **25.09.2007 JP 2007246711**

(43) Date of publication of application:
**09.06.2010 Bulletin 2010/23**

(73) Proprietor: **TOYOTA JIDOSHA KABUSHIKI KAISHA**
**Toyota-shi,**
**Aichi-ken, 471-8571 (JP)**

(72) Inventors:
  • **MORIYA, Hidenori**
  **Toyota-shi,**
  **Aichi-ken, 471-8571 (JP)**
  • **YASUDA, Hiromichi**
  **Toyota-shi,**
  **Aichi-ken, 471-8571 (JP)**
  • **TADOKORO, Ryo**
  **Toyota-shi,**
  **Aichi-ken, 471-8571 (JP)**
  • **OGINO, Ryusuke**
  **Toyota-shi,**
  **Aichi-ken, 471-8571 (JP)**

(74) Representative: **TBK**
**Bavariaring 4-6**
**80336 München (DE)**

(56) References cited:
**DE-A1- 3 833 123     US-A- 5 499 607**

**Description**

BACKGROUND OF THE INVENTION

1. Field of the Invention

The invention relates to a control apparatus and a control method for an internal combustion engine, which determine a property of fuel (fuel property) that changes according to, for example, a concentration of alcohol contained in the fuel supplied to the internal combustion engine.

2. Description of the Related Art

Japanese Patent Application Publication No. 1-88153 (JP-A-1-88153) describes an apparatus that detects a pressure in a cylinder (cylinder pressure)Pc ($\theta$) with respect to a crank angle $\theta$ during "a compression stroke and an expansion stroke" in one combustion cycle, determines the amount of heat generated by combustion in one combustion cycle based on the detected pressure Pc ($\theta$) and the volume Vc ($\theta$) of a combustion chamber with respect to the crank angle $\theta$, and determines a fuel property based on the determined amount of generated heat.

However, the above-described apparatus cannot determine the fuel property until after normal operation (combustion) of the engine starts. Therefore, the apparatus cannot set a fuel amount and/or an ignition timing to an appropriate value(s) according to the fuel property during a period from an engine start time until the fuel property is determined. This may deteriorate startability, emissions, and fuel consumption.

In the prior art according to DE 38 33 123 A1, a control apparatus for an internal combustion engine is disclosed which is provided with cylinder pressure sensors and a determination device that determines an amount of heat generated by a combustion based on a detected cylinder pressure and determines a property of the fuel based on said amount of generated heat.

The further prior art according to US-A-5 499 607 discloses a system for an internal combustion engine which is arranged to gradually increase only the fuel supply quantity for a specific cylinder, while monitoring a variation of a combustion pressure in the specified cylinder, until the variation exceeds a predetermined level.

It is the object of the present invention to provide a control apparatus and a control method for an internal combustion engine which determine a property of fuel and which prevent the deterioration of startability, emissions and fuel consumptions at the same time.

The object is solved by a control apparatus for an internal combustion engine having the combination of the features of claim 1 or a control method having the combination of the features of claim 11. Further advantageous developments of the present invention are defined in the dependent claims.

a time of start of the engine (during cranking before the engine starts to autonomously operate).

A first aspect of the invention relates to a control apparatus for an internal combustion engine. The control apparatus includes: a first cylinder pressure sensor and a second cylinder pressure sensor that are respectively provided in a first cylinder and a second cylinder of a multi-cylinder internal combustion engine, and that detect pressures in the first cylinder and the second cylinder, respectively; a cranking device that cranks the engine in response to a start instruction signal that starts the engine; a mixture control device that forms an air-fuel mixture that includes fuel in a first predetermined fuel amount and air in a first predetermined air amount so that torque that does not make the engine autonomously operate is generated, and combusts the air-fuel mixture in the first cylinder, before combustion, which generates torque that makes the engine autonomously operate, is caused in the second cylinder, when the engine is cranked; and a determination device that determines an amount of heat generated per unit mass of the fuel included in the air-fuel mixture when the air-fuel mixture is combusted in the first cylinder, based on the detected pressure in the first cylinder, and determines a property of the fuel based on the determined amount of generated heat.

With the configuration, for example, the engine is cranked in response to "the start instruction signal", for example, based on an engine start operation performed by a driver, or an automatic operation start instruction in a hybrid vehicle. Further, when the engine is cranked, in the first cylinder (that is, the cylinder used for determination of the fuel property; the cylinder may be referred to as "fuel property determination cylinder), the air-fuel mixture that includes the fuel in the first predetermined fuel amount and the air in the first predetermined air amount (that is, the mixture used for the determination of the fuel property; the mixture may be referred to as "fuel property determination mixture") is formed and the air-fuel mixture is combusted, before the combustion, which generates torque that makes the engine autonomously operate, is caused (that is, the combustion for autonomous operation is caused).

"The torque generated by the engine" due to "the combustion of the air-fuel mixture that includes the fuel in the first predetermined fuel amount and the air in the first predetermined air amount" is set to a value "that does not make the engine autonomously operate". In other words, the first predetermined fuel amount and the first predetermined air amount are set in advance so that the fuel property determination mixture including the fuel in the first predetermined fuel amount and the air in the first predetermined air amount is combustcd without causing a misfire, and the torque, at which the engine stops operating unless the cranking device cranks the engine, is generated (that is, the torque that does not make the engine autonomously operate is generated). Thus, the combustion that generates low torque is caused in the first cylinder, before "the initial combustion for autonomous operation", which is required to start the autonomous operation of the engine, is caused after the start instruction signal is generated.

In addition, when the fuel property determination mixture is combusted in the first cylinder, the amount of heat generated per unit mass of the fuel included in the fuel property determination mixture is determined based on the detected pressure in the first cylinder. Then, the fuel property (for example, the concentration of alcohol in gasoline fuel) is determined based on the determined amount of generated heat.

Thus, the property of the fuel is determined at the time point immediately after the start instruction signal is generated, and before the engine starts to normally operate (that is, before the initial combustion that makes the engine autonomously operate is caused at a time of start of the engine). Therefore, it is possible to control the engine in a manner appropriate for the fuel property (for example, it is possible to control the fuel injection amount for the initial combustion for autonomous operation in a manner appropriate for the fuel property), from the time point at which the engine is actually started (that is, the time point at which the initial combustion for autonomous operation is caused).

In addition, the torque generated by "the combustion of the fuel property determination mixture in the first cylinder" for determining the fuel property is lower than the torque that makes the engine autonomously operate. Accordingly, it is possible to avoid the situation where "an amount of fluctuation in the torque generated by the engine becomes excessively large" due to the combustion for determining the fuel property. Therefore, it is possible to avoid generation of large vibrations.

In this case, the control apparatus for the internal combustion engine may further include a start-time fuel injection control device. After the property of the fuel is determined (that is, after the air-fuel mixture that includes the fuel in the first predetermined fuel amount and the air in the first predetermined air amount is formed and combusted in the first cylinder), the start-time fuel injection control device sets a start-time fuel injection amount (an injection amount required to make the engine autonomously operate, an injection amount for autonomous operation) according to the determined property of the fuel, and supplies the determined start-time fuel injection amount to each of the first cylinder and the second cylinder.

The control apparatus for the internal combustion engine according to the first aspect may further include: at least one flow rate control valve that adjusts an amount of air taken the first cylinder and an amount of the air taken into the second cylinder; and a first fuel injection device that injects the fuel to be supplied to the first cylinder, and a second fuel injection device that injects the fuel to be supplied to the second cylinder. When the start instruction signal is detected, the mixture control device may prevent injection of the fuel, and may control the at least one flow rate control valve so that the amount of the air taken into each of the first cylinder and the second cylinder is larger than the first predetermined air amount. The mixture control device may include a first cylinder selection device. When the detected pressure in the second cylinder increases for a predetermined time or longer, or the detected pressure in the second cylinder increases to a value equal to or above a predetermined value, the first cylinder selection device determines that a piston in the second cylinder is in a compression stroke, and selects, as the first cylinder, a cylinder in which a piston enters an intake stroke after a time point at which the piston in the second cylinder reaches a compression top dead center.

With the configuration, after the start instruction signal is detected, the engine is cranked while the injection of the fuel is prevented. Further, by controlling the flow rate control valve, such as the throttle valve and the intake valve, the amount of the air taken into each cylinder becomes larger than "the first predetermined air amount". Thus, a large amount of the air is taken into the cylinder (second cylinder) in which the piston enters the intake stroke, during cranking after the start instruction signal is generated. The air taken into the second cylinder is greatly compressed. Accordingly, the pressure in the second cylinder continuously increases to a value equal to or above the predetermined value in the compression stroke in the second cylinder. That is, the pressure in the second cylinder sharply increases, as compared to the pressure in the other cylinder (the first cylinder) in which the piston is in the stroke other than the compression stroke.

Thus, when "the detected pressure in the second cylinder increases for the predetermined time or longer" or "the detected pressure in the second cylinder increases to a value equal to or above the predetermined value", the first cylinder selection device determines that the piston is in the compression stroke in the second cylinder. Thus, it is possible to accurately determine the cylinder in which the piston is in the compression stroke, immediately after the start instruction signal is generated. In other words, the control apparatus can quickly and accurately discriminate the cylinders after the cranking is started.

At the time point at which the cylinders are discriminated, the air in an amount larger than the first predetermined air amount is taken into each cylinder using the flow rate control valve. However, the air in the first predetermined air amount needs to be taken into the first cylinder. Thus, the first cylinder selection device selects, as the first cylinder, "the cylinder in which the piston enters the intake stroke" after "the time point at which the piston in the second cylinder reaches the compression top dead center". Accordingly, it is possible to adjust the intake air amount in the first cylinder by controlling the flow rate control valve by the intake stroke (by the end of the intake stroke at the latest) in the first cylinder after the cylinders are discriminated. Thus, the air in the first predetermined air amount is taken into the first cylinder.

The control apparatus for the internal combustion engine may further include: at least one flow rate control valve that adjusts an amount of air taken into the first cylinder and an amount of the air taken into the second cylinder; a crank angle sensor that generates a signal each time a crankshaft of the engine is rotated by a unit angle; a first fuel injection device that injects the fuel to be supplied to the first cylinder, and a second fuel injection device that injects the fuel to be supplied to the second cylinder. When the start instruction signal is detected, the mixture control device may prevent injection of the fuel, and may control the at least one flow rate control valve so that the amount of the air taken into each of the first cylinder and the second cylinder is larger than the first predetermined air amount. The mixture control device may include a reference signal identification device and a fuel injection control device. The reference signal identification device detects a time point at which the detected pressure in the second cylinder reaches a maximum value, and identifies a signal generated by the crank angle sensor at the time point at which the maximum value is detected, as a crank angle reference signal generated by the crank angle sensor at the compression top dead center in the second cylinder. The fuel injection control device sets an absolute crank angle of the engine based on the crank angle reference signal and a signal from the crank angle sensor, and controls the first fuel injection device so that the first fuel injection device injects the fuel in the first predetermined fuel amount for the first cylinder, when the absolute crank angle is equal to a predetermined fuel injection crank angle for injecting the fuel in the first predetermined fuel amount for the first cylinder.

With the configuration as well, after the start instruction signal is detected, the engine is cranked while the injection of the fuel is prevented. Further, by controlling the flow rate control valve, such as the throttle valve and the intake valve, the amount of the air taken into each cylinder becomes larger than "the first predetermined air amount". Thus, a large amount of the air is taken into the second cylinder in which the piston enters the intake stroke, during cranking after the start instruction signal is generated. The air taken into the second cylinder is greatly compressed. Accordingly, the pressure in the second cylinder reaches the maximum value, at the compression top dead center in the second cylinder. That is, the waveform of the pressure in the second cylinder is a sharp-pointed waveform.

Thus, the reference signal identification device detects the time point at which the detected pressure in the second cylinder reaches the maximum value, and identifies the signal generated by the crank angle sensor at the time point at which the maximum value is detected, as the signal generated by the crank angle sensor at the compression top dead center in the second cylinder (that is, "the crank angle reference signal"). Because the maximum value is a large value as described above, it is possible to accurately detect the compression top dead center in the cylinder in which the piston is in the compression stroke. In other words, it is possible to accurately determine the crank angle reference signal immediately after the start instruction signal is generated.

The fuel injection control device sets the absolute crank angle of the engine (that is, the crank angle relative to a specific crank angle (for example, the compression top dead center) in one of the cylinders) based on the crank angle reference signal and the signal from the crank angle sensor, and controls the first fuel injection device "so that the first fuel injection device injects the fuel in the first predetermined fuel amount for the first cylinder", when the absolute crank angle is equal to the predetermined fuel injection crank angle for injecting the fuel in the first predetermined fuel amount for the first cylinder. Thus, it is possible to appropriately supply the fuel in the first predetermined fuel amount for the first cylinder.

Further, the mixture control device may include an intake air amount decrease device that controls the flow rate control valve so that the amount of the air taken into the first cylinder is equal to the first predetermined air amount during a period from when the crank angle reference signal is identified until when an intake stroke in the first cylinder ends.

With the configuration, the air in the first predetermined air amount is reliably taken into the selected first cylinder.

Further, the mixture control device may include a first cylinder fuel amount setting device that determines an amount of air taken into the first cylinder, and sets the first predetermined fuel amount based on the determined amount of the air.

With the configuration, "the air-fuel mixture that includes the air in the first predetermined air amount and the fuel in the first predetermined fuel amount" for generating "torque that does not make the engine autonomously operate" is reliably taken into the first cylinder.

In this case, the flow rate control valve may be an intake valve for the first cylinder, and at least one of an opening timing and a closing timing of the intake valve may be changeable.

When the amount of the air taken into the cylinder is changed by changing the throttle valve opening amount, a certain time is required from the time point at which the throttle valve opening amount is changed until the amount of the air taken into the cylinder is changed. Accordingly, in this case, the cylinder, in which the piston enters the intake stroke after a considerable number of cycles are performed after the cylinders are discriminated, should be selected as the first cylinder.

However, when the amount of the air taken into the cylinder is changed by at least one of the opening timing and the closing timing of the intake valve, the amount of the air taken into the cylinder provided with the intake valve can be quickly changed. Accordingly, when the amount of the air taken into the first cylinder is adjusted by changing at least one of the opening timing and the closing timing of the intake valve for the first cylinder, it is possible to select, as the first cylinder, the cylinder in which the piston enters the intake stroke first among the pistons in all the cylinders after the cylinders are discriminated (or the cylinder in which the piston enters the intake stroke in a relatively short time after the cylinders are discriminated). Consequently, it is possible to more quickly determine the fuel property, and to advance the timing at which the initial combustion for autonomous operation is caused (the timing at which the engine 10 starts to autonomously operate). That is, it is possible to determine the fuel property, and to improve the start performance of the engine.

The control apparatus for the internal combustion engine may further include a first ignition device that is provided for the first cylinder, and that generates a spark in a combustion chamber of the first cylinder in response to an ignition signal, and a second ignition device that is provided for the second cylinder, and that generates a spark in a combustion chamber of the second cylinder in response to the ignition signal. The mixture control device may transmit the ignition signal to the first ignition device so that the air-fuel mixture in the first cylinder, that includes the fuel in the first predetermined fuel amount and the air in the first predetermined air amount is ignited and combusted at an ignition timing after a compression top dead center in the first cylinder.

When the air-fuel mixture is ignited and combusted at the ignition timing after the compression top dead center, high torque is not generated by the combustion. Accordingly, with the configuration, it is possible to reduce the torque generated by the engine due to the combustion for determining the fuel property. Accordingly, it is possible to avoid the situation where an amount of fluctuation in the torque generated by the engine becomes excessively large due to the combustion for determining the fuel property. Therefore, it is possible to avoid generation of large vibrations.

Instead of employing the configuration in which "when the start instruction signal is detected, the air in an amount larger than the first predetermined air amount is taken into the cylinder by opening the flow rate control valve, and thus, the crank angle reference signal is accurately determined", it is possible to employ the following configuration.

That is, the control apparatus for the internal combustion engine may further include: a crank angle sensor that generates a signal each time a crankshaft of the engine is rotated by a unit angle; a first fuel injection device that injects the fuel to be supplied to the first cylinder, and a second fuel injection device that injects the fuel to be supplied to the second cylinder; and a first ignition device that is provided for the first cylinder, and that generates a spark in a combustion chamber of the first cylinder in response to an ignition signal, and a second ignition device that is provided for the second cylinder, and that generates a spark in a combustion chamber of the second cylinder in response to the ignition signal. When the start instruction signal is detected, the fuel may be injected for each of the first cylinder and the second cylinder once. The mixture control device may transmit the ignition signal to each of the first ignition device and the second ignition device so that the air-fuel mixture that includes the fuel is ignited and combusted at an extremely advanced ignition timing that is advanced relative to a minimum spark advance for best torque at which maximum torque is generated by the engine. The mixture control device may include a reference signal identification device and a fuel injection control device. The reference signal identification device detects a time point at which the detected pressure in the second cylinder reaches a maximum value, and identifies a signal generated by the crank angle sensor at the time point at which the maximum value is detected, as a crank angle reference signal generated by the crank angle sensor at the compression top dead center in the second cylinder. The fuel injection control device sets an absolute crank angle of the engine based on the crank angle reference signal and a signal from the crank angle sensor, and controls the first fuel injection device so that the first fuel injection device injects the fuel in the first predetermined fuel amount for the first cylinder, when the absolute crank angle is equal to a predetermined fuel injection crank angle for injecting the fuel in the first predetermined fuel amount for the first cylinder.

With the configuration, the air-fuel mixture is combusted in the second cylinder at the extremely advanced ignition timing, and a large amount of gas generated by the combustion is compressed in the compression stroke in the second cylinder. Accordingly, the pressure in the second cylinder reaches the maximum value that is a large value, at the compression top dead center in the second cylinder. However, the combustion is the small combustion caused by ignition at the extremely advanced ignition timing, and therefore, the torque generated by the engine is extremely low. Thus, almost no vibration due to fluctuation in the torque of the engine is caused.

Thus, the reference signal identification device detects the time point at which the detected pressure in the second cylinder reaches the maximum value, and identifies the signal generated by the crank angle sensor at the time point at which the maximum value is detected, as the signal generated by the crank angle sensor at the compression top dead center in the second cylinder (that is, "the crank angle reference signal"). Because the maximum value is a large value due to the gas generated by the small combustion as described above, it is possible to accurately detect the compression top dead center in the cylinder in which the piston is in the compression stroke. In other words, it is possible to accurately identify the crank angle reference signal immediately after the start instruction signal is generated.

The fuel injection control device sets the absolute crank angle of the engine (that is, the crank angle relative to a specific crank angle (for example, the compression top dead center) in one of the cylinders) based on the crank angle reference signal and the signal from the crank angle sensor, and controls the first fuel injection device "so that the first fuel injection device injects the fuel in the first predetermined fuel amount for the first cylinder", when the absolute crank angle is equal to the predetermined fuel injection crank angle for injecting the fuel in the first predetermined fuel amount for the first cylinder. Thus, it is possible to appropriately supply the fuel in the first predetermined fuel amount for the first cylinder.

A second aspect of the invention relates to a control method for an internal combustion engine that includes a first cylinder and a second cylinder. The control method includes: cranking the engine in response to a start instruction signal that starts the engine; forming and combusting an air-fuel mixture that includes fuel in a first predetermined fuel amount and air in a first predetermined air amount so that torque that does not make the engine autonomously operate is generated in the first cylinder, after the engine starts to be cranked, and before combustion, which generates torque that makes the engine autonomously operate, is caused in the second cylinder; determining an amount of heat generated per unit mass of the fuel included in the air-fuel mixture when the air-fuel mixture is combusted in the first cylinder, based on detected pressure in the first cylinder; and determining a property of the fuel based on the determined amount of generated heat.

According to the above-described aspects, the fuel property is determined at the time point immediately after the start instruction signal is generated, and before the engine starts to normally operate (that is, before the initial combustion that makes the engine autonomously operate is caused at a time of start of the engine). Therefore, it is possible to control the engine in a manner appropriate for the fuel property (for example, it is possible to control the fuel injection amount for the combustion for autonomous operation), from the time point at which the engine is actually started (that is, the time point at which the initial combustion for autonomous operation is caused).

BRIEF DESCRIPTION OF THE DRAWINGS

The foregoing and further objects, features and advantages of the invention will become apparent from the following description of embodiments with reference to the accompanying drawings, wherein like numerals are used to represent like elements and wherein:

FIG. 1 is a schematic diagram showing an internal combustion engine to which a control apparatus according to a first embodiment of the invention is applied;
FIG 2 is a flowchart showing a routine executed by a CPU shown in FIG 1;
FIG. 3 is a time chart showing cylinder pressures and parameters during a control executed by the control apparatus shown in FIG 1 after cranking is started;
FIG 4 is a flowchart showing a cylinder discrimination routine executed by a CPU shown in FIG 1;
FIG 5 is a time chart showing a pressure in a cylinder in which a piston is in a compression stroke, and parameters during the control;
FIG 6 is a flowchart showing an absolute crank angle setting routine (absolute crank angle determination routine) executed by the CPU shown in FIG 1;
FIG. 7 is a flowchart showing an absolute crank angle calculation routine executed by the CPU shown in FIG 1;
FIG 8 is a flowchart showing a cylinder intake air amount calculation routine executed by the CPU shown in FIG. 1;
FIG 9 is a table to which the CPU shown in FIG 1 refers when a fuel property is determined;
FIG. 10 is a table to which the CPU shown in FIG 1 refers when a start-time fuel injection amount is set;
FIG. 11 is a flowchart showing a routine executed by a CPU according to a second embodiment of the invention; and
FIG 12 is a time chart showing cylinder pressures and parameters during a control executed by the control apparatus according to the second embodiment.

DETAILED DESCRIPTION OF EMBODIMENTS

Hereinafter, a control apparatus for an internal combustion engine according to each embodiment of the invention will be described with reference to the drawings.

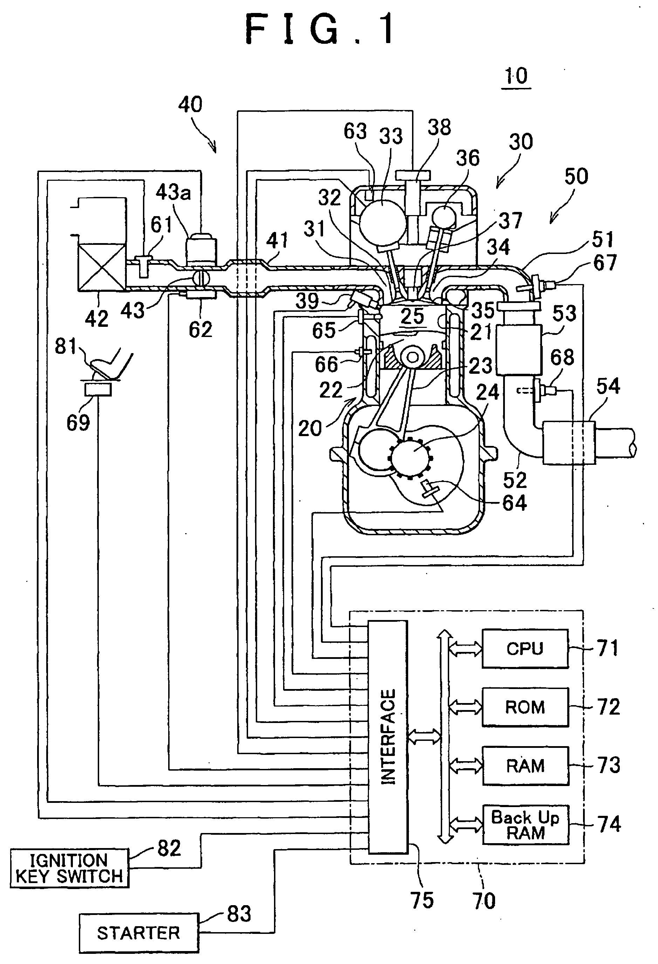

[First embodiment] FIG 1 is a diagram schematically showing a configuration of a system in which a control apparatus for an internal combustion engine according to a first embodiment of the invention is applied to a spark-ignition multi-cylinder (four-cylinder) four-cycle internal combustion engine 10 with a reciprocating piston using gasoline. Although FIG 1 shows a sectional view of one cylinder, the other cylinders have the same configuration. The engine 10 is stably operated when fuel contains alcohol such as ethanol.

The internal combustion engine 10 includes a cylinder block portion 20 that includes a cylinder block, a cylinder block lower case, and an oil pan; a cylinder head portion 30 fixed on the cylinder block portion 20; an intake system 40 for supplying an air-fuel mixture to the cylinder block portion 20; and an exhaust system 50 for discharging exhaust gas from the cylinder block portion 20 to the outside.

The cylinder block portion 20 includes a cylinder 21, a piston 22, a connecting rod 23, and a crankshaft 24.

The piston 22 reciprocates in the cylinder 21. The reciprocating movement of the piston 22 is transmitted to the crankshaft 24 via the connecting rod 23. Thus, the crankshaft 24 is rotated. The wall surface of the cylinder 21, the head of the piston 22, and the cylinder head portion 30 form a combustion chamber 25.

The cylinder head portion 30 includes an intake port 31 connected to the combustion chamber 25, an intake valve 32 that opens/closes the intake port 31, an intake valve drive device 33 that opens/closes the intake valve 32, an exhaust port 34 connected to the combustion chamber 25, an exhaust valve 35 that opens/closes the exhaust port 34, an exhaust camshaft 36 that drives the exhaust valve 35, an ignition plug 37, an igniter 38, and an injector (fuel injection device) 39 that injects the fuel directly into the combustion chamber 25.

The intake valve drive device 33 has a known configuration that adjusts and controls a relative rotational angle (phase angle) of an intake camshaft and an intake cam (not shown) using a hydraulic pressure. The intake valve drive device 33 changes an opening timing (intake valve opening timing) VT of the intake valve 32. In the embodiment, an opening period of the intake valve (valve opening crank angle width) is constant. The intake valve drive device 33 constitutes the flow rate control valve that adjusts the amount of air taken into each cylinder (each combustion chamber 25) by changing the opening timing and the closing timing of the intake valve 32. The igniter 38 includes an ignition coil that generates a high voltage to be provided to the ignition plug 37. The igniter 38 and the ignition plug 37 constitute the ignition device.

The intake system 40 includes an intake pipe 41, an air filter 42, a throttle valve 43, and a throttle valve actuator 43a. The intake pipe 41 includes an intake manifold that is connected to the intake port 31, and that forms an intake passage together with the intake port 31. The air filter 42 is provided at an end portion of the intake pipe 41. The throttle valve 43 is provided in the intake pipe 41 to change an opening sectional area of the intake passage. The throttle valve actuator 43a includes a DC motor, and constitutes the throttle valve drive device (throttle valve control device). The throttle valve 43 constitutes the flow rate control valve that adjusts the amount of the air taken into each cylinder (each combustion chamber). When the throttle valve actuator 43a receives a drive signal (instruction signal) indicating a target throttle valve opening amount TAtgt, the throttle valve actuator 43a drives the throttle valve 43 so that the actual opening amount TA of the throttle valve 43 is equal to the target throttle valve opening amount TAtgt.

The exhaust system 50 includes an exhaust manifold 51 connected to the exhaust port 34, an exhaust pipe 52 connected to the exhaust manifold 51, an upstream three-way catalyst (first catalyst) 53, and a downstream three-way catalyst (second catalyst) 54. The upstream three-way catalyst 53 is provided in the exhaust pipe 52. The downstream three-way catalyst 54 is provided in the exhaust pipe 52 at a position downstream of the upstream three-way catalyst 53. The exhaust port 34, the exhaust manifold 51, and the exhaust pipe 52 constitute an exhaust passage.

The system includes a hot-wire airflow meter 61; a throttle position sensor 62; a cam position sensor 63; a crank angle sensor 64; a cylinder pressure sensor 65 provided in each cylinder; a coolant temperature sensor 66; an upstream air-fuel ratio sensor 67 provided in the exhaust passage at a position upstream of the first catalyst 53; a downstream air-fuel ratio sensor 68 provided in the exhaust passage at a position downstream of the first catalyst 53 and upstream of the second catalyst 54; and an accelerator operation amount sensor 69.

The hot-wire airflow meter 61 detects a mass flow rate of intake air flowing in the intake pipe 41 per unit time, and outputs a signal indicating the mass flow rate Ga. The throttle position sensor 62 detects the opening amount of the throttle valve 43, and outputs a signal indicating the throttle valve opening amount TA. The cam position sensor 63 outputs a pulse when a piston in a cylinder #1 reaches a compression top dead center. In the embodiment, the cam position sensor 63 is not an essential element. The crank angle sensor 64 outputs a pulse signal each time the crankshaft 24 is rotated by 1 degree CA (i.e., unit rotational angle). The pulse signal output from the crank angle sensor 64 is converted to a signal indicating the crank angle and an engine speed NE.

The cylinder pressure sensor 65 detects a pressure in the combustion chamber 25 to which the cylinder pressure sensor 65 is fitted, and outputs a signal indicating a pressure Pc that is the pressure in the combustion chamber 25. The pressure in a cylinder #n (n = an integer number in a range of 1 to 4) detected by the cylinder pressure sensor 65 provided in the cylinder #n is referred to as "pressure Pcn". The coolant temperature sensor 66 detects the temperature of coolant for the engine 10, and outputs a signal indicating the coolant temperature THW.

The upstream air-fuel ratio sensor 67 detects an air-fuel ratio upstream of the catalyst 53, and outputs a signal indicating the air-fuel ratio upstream of the catalyst 53. The downstream air-fuel ratio sensor 68 detects an air-fuel ratio downstream of the catalyst 53, and outputs a signal indicating the air-fuel ratio downstream of the catalyst 53. The accelerator operation amount sensor 69 detects the operation amount of an accelerator pedal 81 operated by a driver, and outputs a signal indicating the operation amount PA of the accelerator pedal 81.

An electric control unit 70 is a known microcomputer that includes a CPU 71, a ROM 72, a RAM 73, a backup RAM 74, and an interface 75. The CPU 71 executes routines (programs) stored in the ROM 72. The programs executed by the CPU 71, tables (look-up tables and maps), constants, and the like are stored in the ROM 72 in advance. The CPU 71 temporarily stores data in the RAM 73 as necessary. When an ignition key switch 82 is in an on position, data is stored in the backup RAM 74, and when the ignition key switch 82 is in an off position, the data is retained in the backup RAM 74. The interface 75 includes an AD converter.

The interface 75 is connected to the sensors 61 to 69, and supplies signals from the sensors 61 to 69 to the CPU 71. The interface 75 transmits drive signals to, for example, "the intake valve control device 33 and the injector 39", and the throttle valve actuator 43a, and transmits an ignition signal to the igniter 38 provided in the each cylinder, according to an instruction from the CPU 71.

The system further includes the ignition key switch 82 and a starter 83.

The ignition key switch 82 is selectively placed in at least one of the off position, the on position, and the start position, according to operation performed by a driver. The ignition key switch 82 is connected to the interface 75. The CPU 71 receives a signal indicating the position of the ignition key switch 82 (an off signal output when the ignition key switch 82 is in the off position, an on signal output when the ignition key switch 82 is in the on position, and a STA signal output when the ignition key switch 82 is in the start position) through the interface 75.

When the position of the ignition key switch 82 is changed from the off position to the start position (that is, when the STA signal, which is a start instruction signal, is generated), the starter 83 receives an instruction from the CPU 71, and rotates the crankshaft 24 (i.e., the starter 83 cranks the engine 10). That is, the starter 83 functions as the cranking device that cranks the engine in response to the start instruction signal that starts the engine 10.

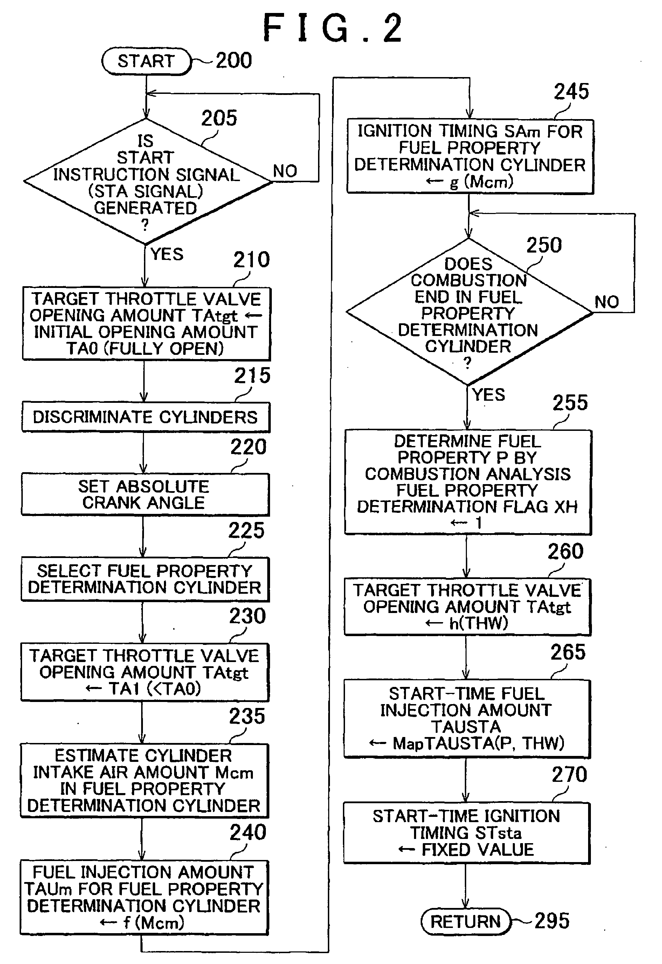

[Summary of Control] Next, a control for an internal combustion engine, which is executed by the first control apparatus with the above-described configuration, will be described. When the position of the ignition key switch 82 is changed from the off position to the on position or the start position, the CPU 71 of the electric control unit 70 sequentially executes processes shown in a flowchart in FIG 2.

First, the CPU 71 executes a process in step 200. Then, in step 205, the CPU 71 monitors whether the start instruction signal (STA signal) is generated. That is, in step 205, the CPU 71 determines whether the position of the ignition key switch 82 is changed to the start position.

In this step, when a driver changes the position of the ignition key switch 82 to the start position, and accordingly, the STA signal is generated, the starter 83 starts cranking the engine 10. The starter 83 continues to crank the engine 10 until the position of the ignition key switch 82 is returned from the start position to the on position, and accordingly, the STA signal disappears.

In this case, the CPU 71 makes an affirmative determination in step 205, and proceeds to step 210. In step 210, the CPU 71 sets a target throttle valve opening amount TAtgt to an initial opening amount TA0 so that the opening amount of the throttle valve 43 (throttle valve opening amount) is equal to the initial opening amount TA0. In the embodiment, the initial opening amount TA0 is an opening amount when the throttle valve 43 is fully open. Consequently, the throttle valve actuator 43a drives the throttle valve 43, and thus, the throttle valve opening amount is equal to the initial opening amount TA0.

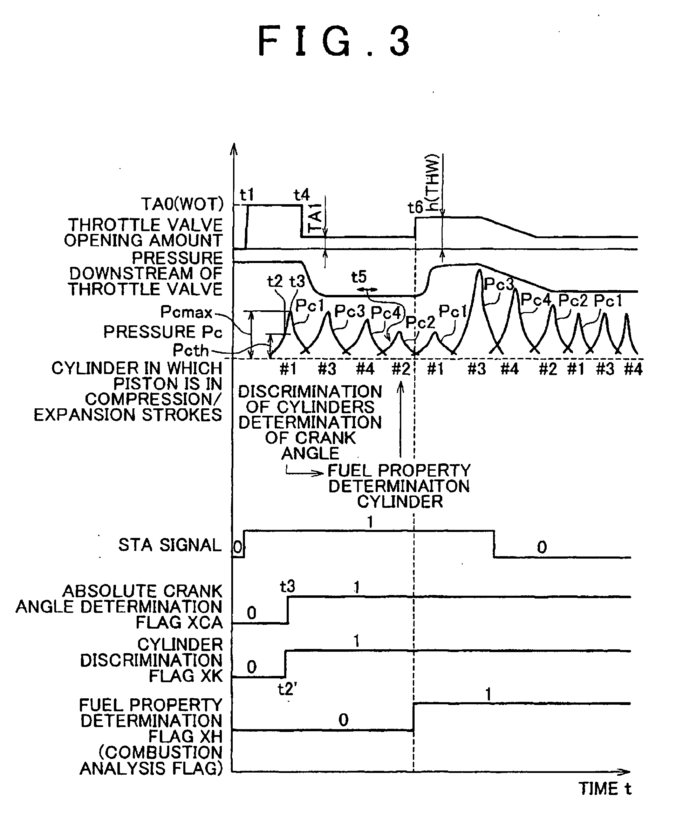

Then, air is compressed in a cylinder where the piston, which has been in an intake stroke, enters a compression stroke due to cranking. FIG. 3 shows an example where the piston in the cylinder #1 (n = 1) enters the compression stroke first among the pistons in all the cylinders. In this case, the pressure Pc1 in the cylinder #1 detected by the cylinder pressure sensor 65 provided in the cylinder #1 starts to increase. At this time, because the pistons in the other cylinders (the cylinders #2 to #4) are in strokes other than the compression stroke, the pressures Pc2 to Pc4 in the cylinders #2 to #4 detected by the cylinder pressure sensors 65 provided in the cylinders #2 to #4 do not increase, and are maintained at a substantially constant value (i.e., a pressure equivalent to an atmospheric pressure). Then, in the cylinder #1, the piston enters an expansion stroke after reaching the compression top dead center. However, because fuel injection is prevented at this time point, combustion is not caused.

Consequently, the pressure Pc1 in the cylinder #1 reaches the maximum value Pcmax when the piston in the cylinder #1 reaches the compression top dead center, and then, decreases. When the pressure Pc1 in the cylinder #1 reaches the maximum value Pcmax, naturally, the pressures Pc2 to Pc4 in the cylinders #2 to #4 are below the maximum value Pcmax.

Accordingly, the CPU 71 monitors the pressures Pcn detected by the cylinder pressure sensors 65 provided in the cylinders, and identifies the cylinder in which the piston is in the compression stroke, and the cylinder in which the piston reaches the compression top dead center, in a manner described below.

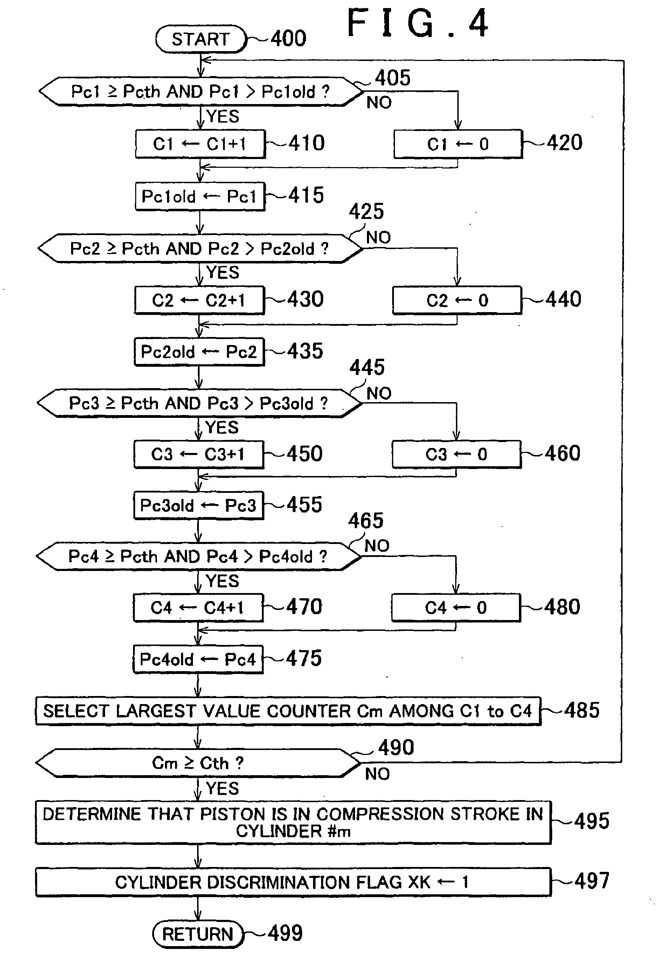

More specifically, when the CPU 71 proceeds to step 215, the CPU 71 starts a routine shown in a flowchart in FIG 4 from step 400. Then, the CPU 71 proceeds to step 405. In step 405, the CPU 71 determines whether the pressure Pc1 in the cylinder #1 is equal to or above a threshold value (predetermined value) Pcth, and the pressure Pc1 has increased (i.e., the pressure Pc1 at the current time point is above a pressure Pc1old in the cylinder #1 detected when the immediately preceding routine is executed). At the time point at which the routine is initially executed, the pressure Pcnold, which is the pressure when the immediately preceding routine is executed (hereinafter, referred to as "previous pressure Pcnold"), is set to an initial value Pc0 that is equivalent to the atmospheric pressure.

When the pressure Pc1 is equal to or above the threshold value Pcth, and the pressure Pc1 has increased, the CPU 71 makes an affirmative determination in step 405, and proceeds to step 410. In step 410, the CPU 71 increases a value of a counter C1 for the cylinder #1 by "1". The values of the counters Cn for the cylinders #n are all reset to "0" by an initial routine executed when the position of the ignition key switch 82 is changed from the off position to the on position. Then, the CPU 71 proceeds to step 415. In step 415, the pressure Pc1 at the current time point is stored as the previous pressure PC1old.

When the pressure Pc1 is below the threshold value Pcth, or the pressure Pc1 has not increased, the CPU 71 makes a negative determination in step 405, and proceeds to step 420. In step 420, the CPU 71 sets the value of the counter C1 for the cylinder #1 to "0". Then, the CPU 71 proceeds to step 415. In step 415, the pressure Pc1 at the current time point is stored as the previous pressure Pc1old.

Next, the CPU 71 executes processes in steps 425 to 440, processes in steps 445 to 460, and processes in steps 465 to 480, in a similar manner as the manner in which the CPU 71 executes the processes in steps 405 to 420.

Thus, when the pressure Pcj in the cylinder #j (j is an integer number in a range of 2 to 4) is equal to or above the threshold value Pcth, and the pressure Pcj has increased, the counter Cj for the cylinder #j is increased by "1". When the pressure Pcj is below the threshold value Pcth, or the pressure Pcj has not increased, the value of the counter Cj for the cylinder #j is reset to "0".

Then, in step 485, the CPU 71 selects the counter Cm that has the largest value (hereinafter, may be referred to as "largest value counter Cm") among the counters Cn (n = integer numbers 1 to 4) for the cylinders #n. Subsequently, in step 490, the CPU 71 determines whether the value of the counter Cm is equal to or larger than a predetermined value Cth. When the value of the counter Cm is smaller than the predetermined value Cth, the CPU 71 returns to step 405, and repeats the above-described processes. When a negative determination is made in step 490, the CPU 71 returns to step 405 after a predetermined time elapses.

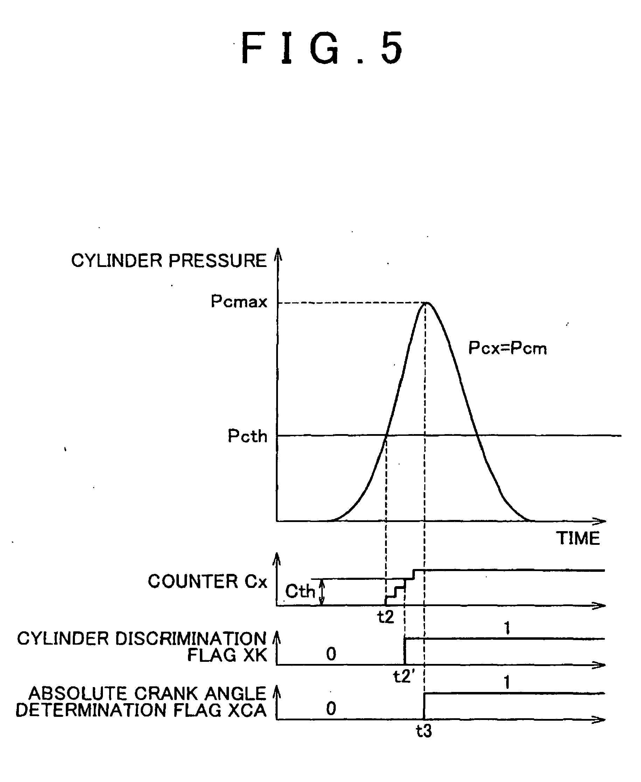

As described above, the pressure Pcx in the cylinder #x (x = an integer number in a range of 1 to 4), in which the piston is in the compression stroke and air is compressed during cranking before combustion starts, is equal to or above the threshold value Pcth, and continues to increase (refer to a time point t2 to a time point t3 in each of FIG. 3 and FIG. 5). Accordingly, in the above-described processes, the value of the counter Cx for the cylinder #x continues to increase, and exceeds the predetermined value Cth after the predetermined time elapses. The values of the counters Cy (y = integer numbers 1 to 4 other than x) for the cylinders other than the cylinder #x are "0" or "the values that are much smaller than the predetermined value Cth".

In this case, when the CPU 71 executes the process in step 485, the CPU 71 selects the counter Cx as the largest value counter Cm, and proceeds to step 490. In step 490, the CPU 71 makes an affirmative determination. Then, the CPU 71 proceeds to step 495. In step 495, the CPU 71 determines that, in the cylinder #x corresponding to the counter Cx, which is selected as the largest value counter Cm, that is, the cylinder #m (m is an integer number in a range of 1 to 4, m = 1 in the example in FIG. 3) corresponding to the largest value counter Cm, the piston is in the compression stroke. Next, the CPU 71 proceeds to step 497. In step 497, the CPU 71 sets a value of a cylinder discrimination flag XK to "1". The value of the cylinder discrimination flag XK is set to "0" by the initial routine. Thus, it is possible to identify the cylinder in which the piston is in the compression stroke at the current time point. Therefore, the process of determining the stroke in which the piston in each cylinder is positioned (i.e., a cylinder discrimination process) is completed (refer to a time point t2' in each of FIG 3 and FIG 5). Then, the CPU 71 returns to step 215 in FIG. 2 via step 499.

Next, the CPU 71 proceeds to step 220. In step 220, an absolute crank angle is set. In the embodiment, the absolute crank angle θ is the rotational angle of the crankshaft 24 relative to the compression top dead center in the cylinder #1 (0 degree CA). The absolute crank angle θ repeatedly changes in a range of 0 to 720 degrees CA. In the case of the internal combustion engine 10 with four cylinders, ignition is performed in the cylinder #1, the cylinder #3, the cylinder #4, and the cylinder #2 in the stated order. Therefore, the pistons in the cylinder #1, the cylinder #3, the cylinder #4, and the cylinder #2 reach the compression top dead center at 0 degree CA (720 degrees CA), 180 degrees CA, 360 degrees CA, and 540 degrees CA, respectively. The absolute crank angle θ may be set relative to the compression top dead center in any cylinder. Alternatively, the absolute crank angle θ may be set relative to a bottom dead center in the expansion stroke, a top dead center in the exhaust (intake) stroke, or a bottom dead center in the intake (compression) stroke.

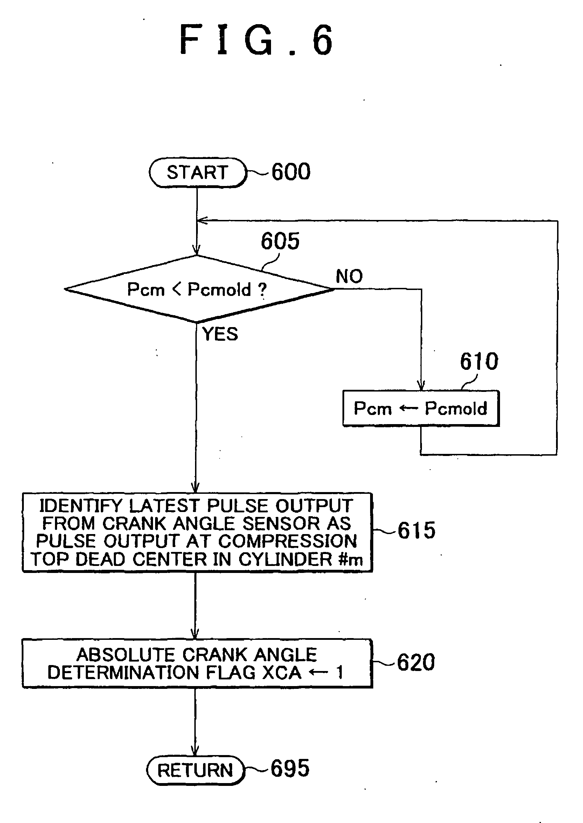

The process in step 220 will be described more specifically. When the CPU 71 proceeds to step 220, the CPU 71 starts a routine shown by a flowchart in FIG 6 from step 600. Then, the CPU 71 proceeds to step 605. In step 605, the CPU 71 determines whether the pressure Pcm at the current time point in the cylinder #m, in which the piston is determined to be in the compression stroke, is below the previous pressure Pcmold.

As shown in FIG. 5, the current time point is immediately after the time point t2' at which the value of the cylinder discrimination flag XK is changed from "0" to "1", and therefore, the pressure Pcm in the cylinder #m has increased. That is, the pressure Pcm at the current time point is above the previous pressure Pcmold. Accordingly, the CPU 71 makes a negative determination in step 605, and proceeds to step 610. In step 610, the pressure Pcm at the current time point is stored as the previous pressure Pcmold. Then, the CPU 71 returns to step 605 after the predetermined time elapses.

Then, by repeatedly executing step 605 and step 610, it is monitored whether the pressure Pcm at the current time point is below the previous pressure Pcmold. The piston in the cylinder #m reaches the compression top dead center, and then, enters the expansion stroke. Thus, as shown by the time point t3 and afterward in FIG 5, the pressure Pcm starts to decrease. In other words, the pressure Pcm reaches the maximum value Pcmax at the time point t3. At this time point, naturally, the pressures in the cylinders other than the cylinder #m are below the maximum value Pcmax.

Accordingly, when the CPU 71 proceeds to step 605 immediately after the time point t3, the CPU 71 makes an affirmative determination in step 605, and proceeds to step 615. In step 615, the CPU 71 determines that the latest pulse output from the crank angle sensor 64 is the pulse output at the compression top dead center in the cylinder #m. Then, the CPU 71 proceeds to step 620. In step 620, the CPU 61 sets the value of an absolute crank angle determination flag XCA to "1". Then, the CPU 71 returns to step 220 in FIG. 2 via step 695. The value of the absolute crank angle determination flag XCA is set to "0" by the above-described initial routine.

Thus, the CPU 71 determines the time point t3 at which the pressure Pcn detected by one of the plurality of cylinder sensors 65 reaches the maximum value Pcmax (in other words, "the time point t3 at which the pressure Pcn reaches the maximum value Pcmax, and the pressures Pcn detected by the other cylinder pressure sensors 65 are below the maximum value Pcmax). Then, the CPU 71 determines that the pulse signal generated by the crank angle sensor 64 at the determined time point (or a time point closest to the determined time point) is the pulse signal generated by the crank angle sensor 64 at the compression top dead center (or at a time point closest to the compression top dead center) in the cylinder in which the pressure Pcn reaches the maximum value Pcmax.

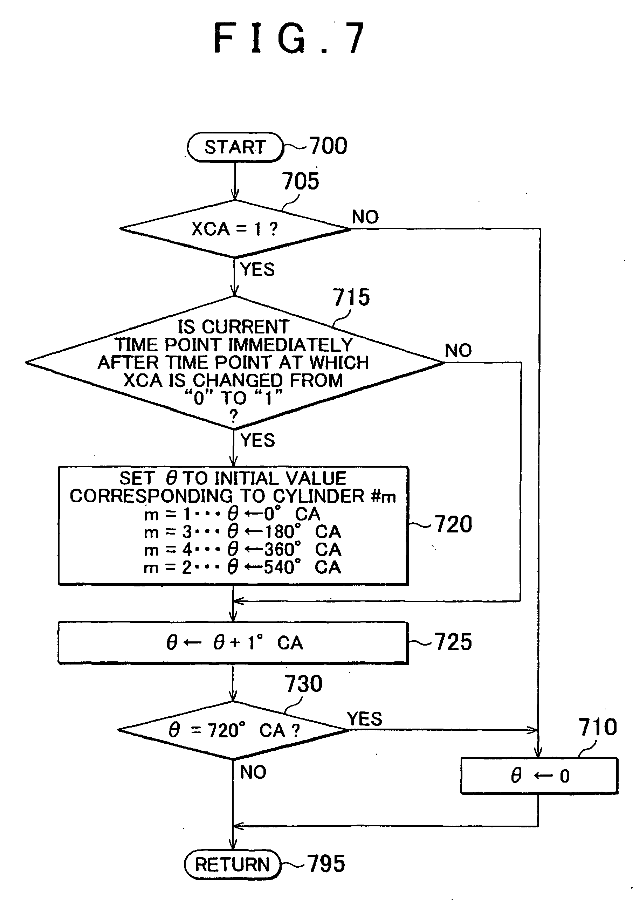

The CPU 71 executes an absolute crank angle calculation routine shown in FIG. 7, each time the crank angle sensor 64 outputs the pulse signal. That is, the absolute crank angle calculation routine is an interrupt routine based on the pulse signal output from the crank angle sensor 64. Accordingly, when the pulse signal is generated by the crank angle sensor 64, the CPU 71 starts the absolute crank angle calculation routine in FIG. 7 from step 700, and proceeds to step 705. In step 705, the CPU 71 determines whether the value of the absolute crank angle determination flag XCA is "1".

When the value of the absolute crank angle determination flag XCA is not "1", the CPU 71 makes a negative determination in step 705, and proceeds to step 710. In step 710, the CPU 71 sets the absolute crank angle $\theta$ to "0". Then, the CPU 71 proceeds to step 795, and ends the routine. Consequently, the absolute crank angle $\theta$ is maintained at 0 degree CA from the time point at which the start instruction signal (STA signal) is generated until the time point at which the compression top dead center in one of the cylinders is detected. That is, the absolute crank angle $\theta$ is maintained at 0 degree CA after cranking is started due to the generation of the start instruction signal (STA signal), until the time point at which the pressure Pc in one of the cylinders reaches the maximum value Pcmax, and accordingly, the value of the absolute crank angle determination flag XCA is set to "1".

When the value of the absolute crank angle determination flag XCA is changed from "0" to " 1" during a period from the time point at which the CPU 71 executes the immediately preceding absolute crank angle calculation routine until the time point at which the CPU 71 executes the current absolute crank angle calculation routine, the CPU 71 makes an affirmative determination in step 705, and proceeds to step 715. In step 715, the CPU 71 determines whether the current time point is immediately after the time point at which the value of the absolute crank angle determination flag XCA is changed from "0" to "1".

In this case, because the current time point is immediately after the time point at which the value of the absolute crank angle determination flag XCA is changed from "0" to "1", the CPU 71 makes an affirmative determination in step 715, and proceeds to step 720. In step 720, the CPU 71 sets the crank angle $\theta$ to the initial value in accordance with the cylinder #m (i.e., the cylinder in which the piston is in the compression stroke, and the pressure reaches the maximum value Pcmax). In the embodiment, when "m" is 1, the initial value is 0 degree CA, when "m" is 3, the initial value is 180 degrees CA, when "m" is 4, the initial value is 360 degrees CA, and when "m" is 2, the initial value is 540 degrees CA. Thus, the absolute crank angle $\theta$ is set relative to the compression top dead center in the cylinder #1.

When the time point at which the CPU 71 proceeds to step 715 is not "immediately after the time point at which the value of the absolute crank angle determination flag XCA is changed from "0" to "1"", the CPU 71 makes a negative determination in step 715, and proceeds directly to step 725.

Next, in step 725, the CPU 71 increases the absolute crank angle $\theta$ by 1 degree, and proceeds to step 730. In step 730, the CPU 71 determines whether the absolute angle $\theta$ is equal to 720 degrees CA. When the absolute angle $\theta$ is equal to 720 degrees CA, the CPU 71 makes an affirmative determination in step 730, and proceeds to step 710. In step 710, the CPU 71 sets the absolute crank angle $\theta$ to "0". Then, the CPU 71 proceeds to step 795, and ends the routine.

Consequently, after the time point at which the value of the absolute crank angle determination flag XCA is set to "1", the absolute crank angle $\theta$ becomes 0 degree CA at the compression top dead center in the cylinder #1, and the absolute crank angle $\theta$ is increased by 1 degree CA each time the pulse signal is generated by the crank angle sensor 64.

After the CPU 71 executes step 220 in FIG 2, the CPU 71 proceeds to step 225. In step 225, the CPU 71 selects the cylinder in which combustion for determining a fuel property should be caused (that is, a determination cylinder used for determination of the fuel property (specific cylinder); the cylinder may be referred to as "fuel property determination cylinder"). More specifically, because the cylinders have been discriminated, and the absolute crank angle θ has been determined (the compression top dead center in the cylinder #m has been detected) at the current time point, the CPU71 selects, as the "fuel property determination cylinder", a cylinder in which the piston enters the intake stroke after the current time point (i.e., the compression top dead center in the cylinder in which the piston is determined to reach the compression top dead center first among the pistons in all the cylinders after cranking is started), and in which the intake air amount can be changed (decreased) to "the first predetermined air amount that is targeted" by changing (decreasing) the throttle valve opening amount from the current time point. In the embodiment, the CPU 71 selects, as the fuel property determination cylinder, "the cylinder in which the piston reaches the compression top dead center at the time point at which the crank angle changes by substantially 540 degrees CA from the current time point".

That is, in the example shown in FIG. 3, the current time point is immediately after the time point t3 (that is, immediately after the compression top dead center in the cylinder #1). The CPU 71 selects, as the fuel property determination cylinder, the cylinder in which the piston enters the intake stroke after the time point t3, and in which the piston reaches the compression top dead center at the time point at which the crank angle changes by substantially 540 degrees CA from the current time point (i.e., the cylinder #2), for the following reason. The intake stroke in the cylinder #2 starts at a time point t5. By changing the throttle valve opening amount to a first opening amount (opening amount for the determination of the fuel property) TA1 at a time point t4 immediately after the time point t3, the pressure downstream of the throttle valve is sufficiently decreased before the time point t5. Accordingly, the intake air amount in the cylinder #2 can be changed (decreased) to "the first predetermined air amount". In other words, there is a high possibility that the intake air amount in each of the cylinders #3 and #4, in which the piston reaches the compression top dead center following the piston in the cylinder #1, is not decreased to the first predetermined air amount even if the throttle valve opening amount is changed to the first opening amount at the time point t4.

Next, the CPU 71 proceeds to step 230. In step 230, the CPU 71 sets the target throttle valve opening amount TAtgt to the first opening amount TA1 so that the throttle valve opening amount is equal to the first opening amount TA1. In the embodiment, the first opening amount TA1 is set in advance so that the first opening amount TA1 is smaller than the initial opening amount TA0, and the air in the first predetermined air amount is taken into the fuel property determination cylinder (i.e., the cylinder #2 in the example in FIG. 3). Consequently, the throttle valve actuator 43a drives the throttle valve 43, and thus, the throttle valve opening amount is equal to the first opening amount TA1.

The step 230 may be regarded as the function of the intake air amount decrease device that controls the flow rate control valve (the throttle valve 43 in this case) so that the amount of the air taken into the fuel property determination cylinder during a period from when a crank angle reference signal is identified (determined) (refer to step 220 in FIG. 2) until when the intake stroke in the fuel property determination cylinder ends is equal to the first predetermined air amount.

Next, the CPU 71 proceeds to step 235. In step 235, the CPU 71 estimates an air amount Mcm that is an amount of the air taken into the fuel property determination cylinder (the cylinder #2 in the example in FIG. 3), based on the pressure Pcm in the fuel property determination cylinder during a period from when the compression stroke in the fuel property determination cylinder starts until when the piston in the fuel property determination cylinder reaches the compression top dead center. Hereinafter, the air amount Mcm may be referred to as "cylinder intake air amount Mcm". The cylinder intake air amount Mcm is substantially equal to the above-described "first predetermined air amount".

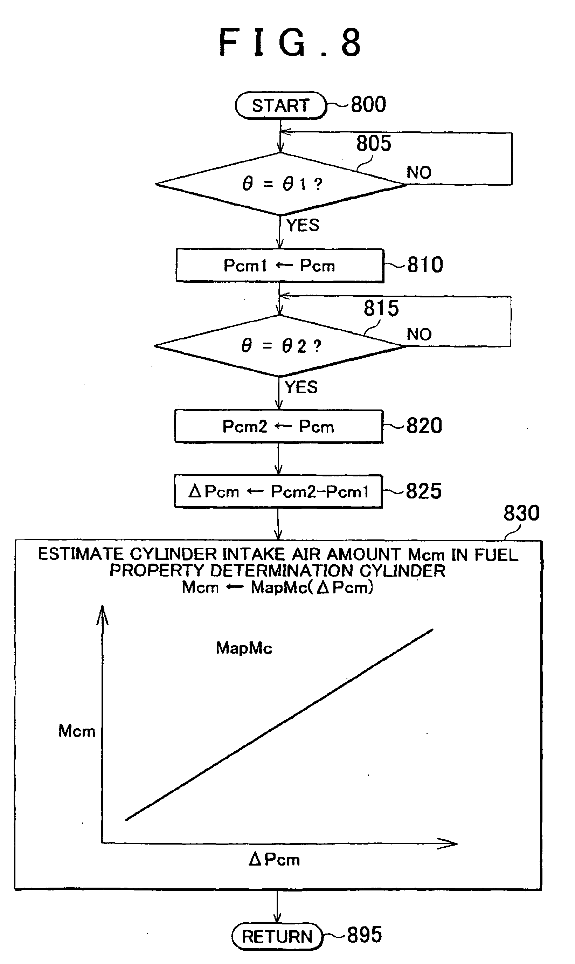

More specifically, when the CPU 71 proceeds to step 235, the CPU 71 starts a routine shown in a flowchart in FIG. 8 from step 800. Then, the CPU 71 proceeds to step 805. In step 805, the CPU 71 monitors whether the absolute crank angle θ is equal to "a crank angle θ1 (first crank angle θ1) immediately after the state of the intake valve for the fuel property determination cylinder (the cylinder #m) is changed from an open state to a closed state". When the absolute crank angle θ is equal to the first crank angle θ1, the CPU 71 makes an affirmative determination in step 805, and proceeds to step 810. In step 810, the CPU 71 stores the pressure Pcm at the current time point as the pressure Pcm1 in the cylinder #1.

Next, the CPU 71 proceeds to step 815. In step 815, the CPU 71 monitors whether the absolute crank angle θ is equal to "a crank angle θ2 that is retarded relative to the first crank angle, and that is advanced relative to the compression top dead center in the fuel property determination cylinder (the cylinder #m) by a predetermined angle α°". When the absolute crank angle θ is equal to the second crank angle θ2, the CPU 71 makes an affirmative determination in step 815, and proceeds to step 820. In step 820, the CPU 71 stores the pressure Pcm at the current time point as the pressure Pcm2 in the cylinder #2. The crank angle θ2 is advanced relative to a fuel injection crank angle θinj (β° BTDC) described below.

Next, the CPU 71 proceeds to step 825. In step 825, the CPU 71 determines a difference ΔPcm (ΔPcm = Pcm2 - Pcm1) between the pressure in the cylinder #1 and the pressure in the cylinder #2. Then, in step 830, the CPU 71 estimates the cylinder intake air amount Mcm in the fuel property determination cylinder (the cylinder #m) based on the table MapMc (ΔPcm) shown in the block in step 830, and the actual difference ΔPcm determined in step 825. The table MapMc (ΔPcm) is empirically set in advance and stored in the ROM 72. A detailed method of determining the cylinder intake air amount Mcm based on the pressures in the cylinders is described in, for example, Japanese Patent Application Publication No. 9-53503 (JP-A-9-53503). Then, the CPU 71 returns to step 235 in FIG 2 via step 895.

Next, the CPU 71 proceeds to step 240. In step 240, the CPU 71 sets a fuel injection amount TAUm for the fuel property determination cylinder, based on the cylinder intake air amount Mcm in the fuel property determination cylinder estimated in step 235, and a function f. In the embodiment, the function f divides the cylinder intake air amount Mcm by the stoichiometric air-fuel ratio stoich (TAUm = f (Mcm) = Mcm /stoich). Then, the CPU 71 causes the injector 39 provided for the fuel property determination cylinder to inject the fuel in the fuel injection amount TAUm, when the absolute crank angle θ is equal to the predetermined crank angle (fuel injection crank angle θinj). For example, the fuel injection crank angle θinj is set to β° CA before the compression top dead center in the fuel property determination cylinder.

Consequently, in the fuel property determination cylinder, the air-fuel mixture that includes the fuel in the first predetermined fuel amount TAUm and the air in the first predetermined air amount Mcm is formed. The first predetermined fuel amount TAUm and the first predetermined air amount Mcm are set in advance so that when the air-fuel mixture is combusted, torque that does not make the engine 10 autonomously operate is generated. In other words, the first opening amount TA1 and the function f are set in advance so that when the above-described air-fuel mixture is combusted, torque that makes the engine autonomously operate is not generated in the fuel property determination cylinder. The first predetermined fuel amount TAUm is adjusted so that when flame-retardant fuel that is difficult to combust (for example, heavy gasoline or fuel with a high ethanol concentration) is used, combustion is caused, and when the most flammable fuel (for example, light gasoline) is used, the generated torque does not exceed the torque that makes the engine autonomously operate.

Next, the CPU 71 proceeds to step 245. In step 245, the CPU 71 sets an ignition timing SAm for the fuel property determination cylinder, based on the cylinder intake air amount Mcm in the fuel property determination cylinder (the cylinder #m) and a function g. In the embodiment, the function g sets the ignition timing SAm to a predetermined constant angle after the compression top dead center in the fuel property determination cylinder (γ° CA ATDC), regardless of the cylinder intake air amount Mcm. Then, the CPU 71 provides an instruction to the igniter 38 provided in the fuel property determination cylinder so that ignition is performed in the fuel property determination cylinder when the crank angle θ in the fuel property determination cylinder is equal to γ° CA ATDC.

Next, the CPU 71 proceeds to step 250. In step 250, the CPU 71 determines whether the absolute crank angle θ is equal to an absolute crank angle θa immediately after the combustion ends in the fuel property determination cylinder (for example, 150 degrees after the compression top dead center in the fuel property determination cylinder). When the absolute crank angle θ is equal to the absolute crank angle θa, the CPU 71 makes an affirmative determination in step 250, and proceeds to step 255. In step 255, combustion analysis is performed, and thus, a fuel property is determined. In the embodiment, the fuel property is represented by alcohol concentration P.

More specifically, in step 255, the CPU 71 determines a total generated heat amount Qsum, which is a total amount of heat generated by the above-described combustion in the fuel property determination cylinder, according to the equation (1) described below.

$$Q_{sum} = Pcm(\theta e) \cdot V(\theta e)^{\kappa} - Pcm(\theta s) \cdot V(\theta s)^{\kappa} \quad \cdots(1)$$

The above-described equation (1) is set based on knowledge that a pattern of change in an accumulated heat amount Q substantially matches a pattern of change in Pcm (θm) x V (θm)$^{\kappa}$. The accumulated heat amount Q is an accumulated amount of heat that is generated heat, and that contributes to work applied to the piston. The Pcm (θm) is "the pressure in the fuel property determination cylinder" at the crank angle θm relative to the compression top dead center in the cylinder (the fuel property determination cylinder, the cylinder #m) to which attention is directed. V (θm) is "a volume of the combustion chamber 25 of the fuel property determination cylinder" at the crank angle θm. κ is "a ratio of specific heat of the mixed gas (for example, 1.32)". A crank angle θs (θs < 0) is a timing at which both of the intake valve 32 and the exhaust valve 35 are closed in the compression stroke for the above-described combustion in the fuel property determination cylinder, and which is sufficiently advanced relative to an ignition timing (for example, θs = - 30 degrees, that is, 30 degrees CA BTDC). The crank angle θe (θe > 0) is a predetermined timing that is retarded relative to the most retarded timing at which the above-described combustion in the fuel property determination cylinder substantially ends, and that is advanced relative to an exhaust valve opening timing (for example, θe = 90 degrees, that is, 90 degrees CA ATDC). The CPU 71 obtains the Pcm (θe) and the Pcm (θs) from the cylinder pressure sensor 65 for the fuel property determination cylinder when the crank angle in the fuel property determination cylinder is equal to θe and θs, and then stores the Pcm (θe) and the Pcm (θs) in the RAM 73. V (θs) and V (θe) are stored in the ROM 72 in advance. Pcm (θe) x Vc (θe)$^{\kappa}$ in the equation (1) may be replaced by the maximum value of Pcm (θm) x V (θm)$^{\kappa}$ during a period from the crank angle θs to the crank angle θe.

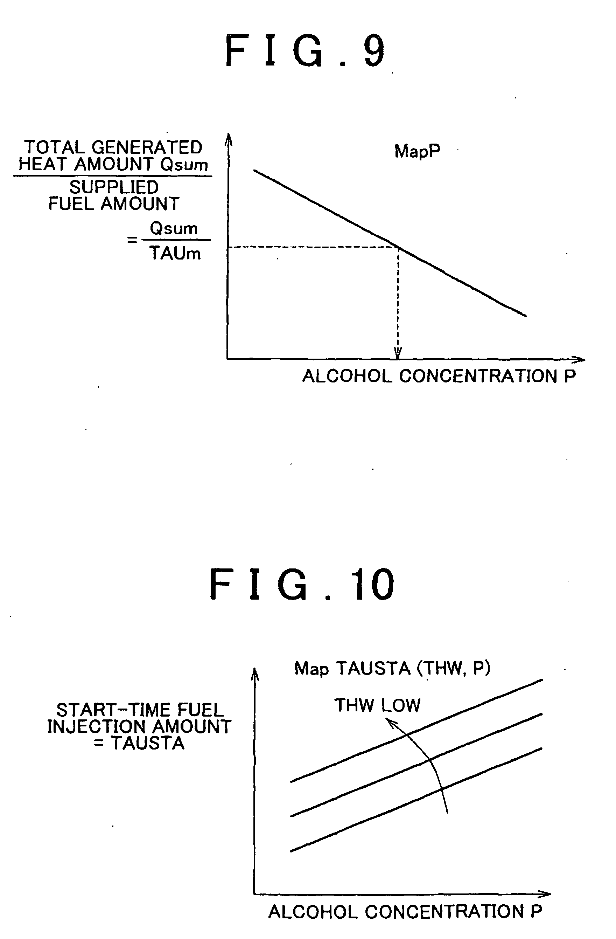

Further, the CPU 71 determines an amount of heat generated per unit mass of the fuel (= Qsum / TAUm), by dividing the total generated heat amount Qsum determined in the above-described manner by the injected fuel amount TAUm. That is, when "the air-fuel mixture that includes the fuel in the first predetermined fuel amount TAUm and the air in the first predetermined air amount Mcm" is combusted in the fuel property determination cylinder, the CPU 71 determines the amount of heat generated per unit mass of the fuel included in the air-fuel mixture, based on at least the pressure Pc detected by the cylinder pressure sensor 65 provided in the fuel property determination cylinder. Then, the CPU 71 determines the fuel property P (alcohol concentration P) based on this value (that is, the amount of heat generated per unit mass of the fuel = Qsum / TAUm) using the table MapP (Qsum / TAUm) shown in FIG 9. In the embodiment, because a fuel density is substantially constant regardless of the fuel property, the mass of the fuel is regarded as being proportional to the fuel injection amount TAUm.

Next, in step 255, the CPU 71 sets the value of a fuel property determination flag (combustion analysis flag) XH to "1" (refer to a time point t6 in FIG 3).

Then, the CPU 71 proceeds to step 260. In step 260, the CPU 71 sets the target throttle valve opening amount TAtgt to a normal opening amount (third opening amount) h (THW) determined based on the coolant temperature THW detected by the coolant temperature sensor 66 and a function h so that the throttle valve opening amount is equal to the normal opening h (THW). In the embodiment, the normal opening h (THW) is set to increase as the coolant temperature THW decreases.

Consequently, as shown by the time point t6 in FIG 3, the throttle valve actuator 43a drives the throttle valve 43, and thus, the throttle valve opening amount is equal to the normal opening h (THW). Accordingly, the pressure downstream of the throttle valve, which indicates the actual intake air amount, is increased, and the air in a relatively large amount (i.e., an amount larger than the first predetermined air amount) is taken into the cylinder in which the piston enters the intake stroke after the time point t6.

Next, the CPU 71 proceeds to step 265. In step 265, the CPU 71 calculates a start-time fuel injection amount TAUSATA, based on the coolant temperature THW detected by the coolant temperature sensor 66, the fuel property P, and the table MapTAUSTA (THW, P). In the table MapTAUSTA (THW, P), the start-time fuel injection amount TAUSATA is increased as the coolant temperature THW decreases, and the start-time fuel injection amount TAUSATA is increased as the alcohol concentration P increases. Then, the CPU 71 causes the injector 39 provided in the cylinder #L (L is an integer number in a range of 1 to 4) to inject the fuel in the start-time fuel injection amount TAUSATA for the cylinder #L, each time the absolute crank angle θ is equal to the predetermined absolute crank angle θinjL set in advance for the cylinder #L.

Next, the CPU 71 proceeds to step 270. In step 270, the CPU 71 sets a start-time ignition timing SAsta to a constant value before the compression top dead center in each cylinder (ξ° BTDC). When the crank angle θ in each cylinder is equal to ξ° BTDC, the CPU 71 provides an instruction to the igniter 38 for the cylinder to perform ignition.

Consequently, in the example in FIG. 3, in the cylinder #3, the air-fuel mixture that includes "the air in a relatively large amount (i.e., the intake air amount when the throttle valve opening amount is equal to the normal opening amount h (THW))" and "the fuel in the start-time fuel injection amount TAUSATA" is ignited at the start-timing ignition timing SAsta before the compression top dead center, and combusted. Torque generated at this time is large enough to make the engine 10 autonomously operate. Accordingly, the fuel is combusted in the cylinder #3, and the engine 10 is actually started by the combustion in the cylinder #3 (i.e., initial combustion that makes the engine 10 autonomously operate (hereinafter, may be referred to as "initial combustion for autonomous operation")).

As described above, the first control apparatus includes a mixture control device (refer to steps 230 to 245 in FIG 2). When the cranking device (starter 83) cranks the engine 10, before the combustion, which generates the torque that makes the engine 10 autonomously operate, is caused in one of the cylinders, the mixture control device forms "the air-fuel mixture that includes the fuel in the first predetermined fuel amount TAUm and the air in the first predetermined air amount Mcm (fuel property determination mixture) that generates the torque that does not make the engine 10 autonomously operate, and combusts the air-fuel mixture by spark ignition at the ignition timing after the compression top dead center, in "the specific cylinder (fuel property determination cylinder)" in which the piston enters the intake stroke and reaches the compression top dead center after the compression top dead center in the cylinder in which the piston reaches the compression top dead center first among the pistons in all the cylinders after the cranking is started.

Further, the first control apparatus includes a determination device (refer to step 255 in FIG. 2, and FIG 9) that determines the amount of heat generated per unit mass of the fuel included in the fuel property determination mixture when the fuel property determination mixture is combusted in the specific cylinder (the fuel property determination cylinder), and that determines the property of the fuel based on the determined amount of generated heat.

Accordingly, when the engine 10 starts to be cranked in response to "the start instruction signal (STA signal)", for example, based on an engine start operation performed by the driver, or an automatic operation start instruction in a hybrid vehicle, the fuel property determination mixture is formed in the specific cylinder (the fuel property determination cylinder), and the fuel property determination mixture is ignited and combusted at the ignition timing after the compression top dead center.

"The torque generated by the engine" due to "the combustion of the fuel property determination mixture" in the specific cylinder is not large enough to make the engine autonomously operate. In other words, the first predetermined fuel amount TAUm and the first predetermined air amount Mcm are set in advance so that the fuel property determination mixture that includes the fuel in the first predetermined fuel amount TAUm and the air in the first predetermined air amount Mcm is combusted without causing a misfire, and the torque, at which the engine stops operating unless the cranking device cranks the engine, is generated (that is, the torque that does not make the engine autonomously operate is generated). Thus, the combustion that generates low torque is caused in the fuel property determination cylinder, before "the initial combustion for autonomous operation", which is required to start the autonomous operation of the engine, is caused after the start instruction signal is generated.

In addition, when "the fuel property determination mixture is combusted", the amount (= Qsum / TAUm) of heat generated per unit mass of the fuel included in the fuel property determination mixture is determined, and the fuel property P (the alcohol concentration P) is determined based on the amount of generated heat.

Thus, the property of the fuel is determined at the time point immediately after the start instruction signal is generated, and before the engine 10 starts to normally operate (that is, before the initial combustion that makes the engine autonomously operate is caused at a time of start of the engine 10). Therefore, it is possible to control the engine in a manner appropriate for the fuel property (for example, it is possible to inject the fuel in the start-time fuel injection amount TAUSATA), from the time point at which the engine is actually started (that is, the time point at which the initial combustion for autonomous operation is caused).

In addition, the torque generated by "the combustion of the fuel property determination mixture" for determining the fuel property is lower than the torque that makes the engine 10 autonomously operate. Accordingly, it is possible to avoid the situation where an amount of fluctuation in the torque generated by the engine 10 becomes excessively large due to the combustion for determining the fuel property. Therefore, it is possible to avoid generation of large vibrations.

Further, the first control apparatus includes the flow rate control valve (throttle valve 43) that adjusts the amount of the air taken into each cylinder, and the fuel injection devices (the plurality of injectors 39) provided in the respective cylinders to inject the fuel supplied to the cylinders.

In addition, when the start instruction signal (STA signal) is detected, the first control apparatus prevents injection of the fuel, and controls the flow rate control valve (the throttle valve 43) so that the amount of the air taken into each cylinder is larger than the first predetermined air amount (equivalent to the air amount Mcm) (refer to step 210 and step 230 in FIG 2).

The first control apparatus includes a first cylinder selection device (refer to step 225 in FIG 2). The first cylinder selection device monitors the plurality of cylinder pressures detected by the plurality of cylinder pressure sensors 65 while the injection of the fuel is prevented, and the flow rate control valve (the throttle valve 43) is controlled so that the amount of the air taken into each cylinder is larger than the first predetermined air amount. When the cylinder pressure among the detected plurality of cylinder pressures increases for a predetermined time or longer (refer to the routine in FIG. 4), the first cylinder selection device determines that the piston is in the compression stroke in the cylinder provided with the cylinder pressure sensor that detects the pressure that increases for the predetermined time or longer (refer to step 485 to step 495 in FIG. 4), and selects the cylinder in which the piston enters the intake stroke after the time point at which the piston reaches the compression top dead center in the cylinder in which the piston is determined to be in the compression stroke, as the specific cylinder, that is, the fuel property determination cylinder.

Thus, after the time point at which the start instruction signal (SAT signal) is detected, the engine 10 is cranked while the injection of the fuel is prevented. Further, because the amount of the air taken into each cylinder is larger than "the first predetermined air amount", a large amount of the air is taken into the cylinder in which the piston enters the intake stroke after cranking is started. The air taken into the cylinder is greatly compressed in the compression stroke in the cylinder. Thus, the pressure in the cylinder continuously increases to a value equal to or above a predetermined value in the compression stroke (i.e., sharply increases as compared to the other cylinders in which the pistons are in the stroke other than the compression stroke). That is, in this situation, the waveform of the pressure in the cylinder in which the piston is in the compression stroke greatly differs from the waveforms of the pressures in the other cylinders. Accordingly, the first control apparatus can accurately determine the cylinder in which the piston is in the compression stroke, immediately after the start instruction signal is generated. That is, the first control apparatus can accurately discriminate the cylinders.

Also, the cylinder, in which the piston enters the intake stroke after the time point at which the piston reaches the compression top dead center in the cylinder in which the piston is determined to be in the compression stroke, is selected as the fuel property determination cylinder (refer to step 225). Accordingly, it is possible to adjust (decrease) the intake air amount in the fuel property determination cylinder by controlling the flow rate control valve, by the time at which the intake stroke is performed (by the end of the intake stroke at the latest) in the fuel property determination cylinder after the cylinders are discriminated. Thus, the air in the first predetermined air amount Mcm is taken into the fuel property determination cylinder.

Further, the first control apparatus includes a reference signal identification device (refer to step 615 in FIG 6). When the start instruction signal (STA signal) is detected, the reference signal identification device monitors the plurality of cylinder pressures detected by the plurality of cylinder pressure sensors 65, and thus, detects the time point at which the pressure detected by one of the cylinder pressure sensors 65 reaches the maximum value Pcmax (refer to the routine in FIG 6) while the injection of the fuel is prevented, and the flow rate control valve is controlled so that the amount of the air taken into each cylinder is above the first predetermined air amount. The reference signal identification device identifies the signal (pulse signal) generated by the crank angle sensor 64 at the time point at which the maximum value Pcmax is detected (or the time point closest to the time point at which the maximum value Pcmax is detected), as "the crank angle reference signal generated by the crank angle sensor 64 at the compression top dead center in the cylinder in which the pressure reaches the maximum value Pcmax" (refer to step 615 in FIG 6).

As described above, the maximum value Pcmax of the pressure is high in the cylinder in which the piston is in the compression stroke. Therefore, it is possible to accurately detect the compression top dead center in the cylinder in which the piston is in the compression stroke. In other words, it is possible to accurately determine the crank angle reference signal, immediately after the start instruction signal is generated.

Also, the first control apparatus includes a fuel injection control device. The fuel injection control device sets the absolute crank angle $\theta$ of the engine based on the determined crank angle reference signal and the signal from the crank angle sensor (refer to the routine in FIG. 7). When the determined absolute crank angle $\theta$ is equal to the fuel injection crank angle $\theta inj$ set in advance for the fuel property determination cylinder, the fuel injection control device "causes the injector 39 provided for the fuel property determination cylinder to inject the fuel in the first predetermined fuel amount TAUm" (refer to step 240 in FIG. 2).

Consequently, in the fuel property determination cylinder, the fuel property determination mixture that includes the fuel in the first predetermined fuel amount TAUm and the air in the first predetermined air amount Mcm is reliably formed.

Also, the first control apparatus includes a first cylinder fuel amount setting device. The first cylinder fuel amount setting device determines the amount of the air taken into the fuel property determination cylinder (the specific cylinder) (refer to step 235 in FIG. 2 and the routine in FIG. 8), and sets the first predetermined fuel amount TAUm based on the determined amount of the air (refer to step 240 in FIG 2). Thus, "the fuel property determination mixture" is reliably formed in "the fuel property determination cylinder".

Further, the first control apparatus ignites and combusts the fuel property determination mixture formed in the fuel property determination cylinder (the specific cylinder) at the ignition timing SAm after the compression top dead center in the fuel property determination cylinder (refer to step 245 in FIG. 2). Thus, because the fuel property determination mixture is ignited at the ignition timing after the compression top dead center, the torque generated by the engine due to the combustion is low. Consequently, the amount of fluctuation in the torque of the engine 10 is not so large. This avoids the situation where large vibrations occur due to the determination of the fuel property.

[The first control apparatus in a modified example] The first control apparatus in a modified example uses the intake valve 32 instead of the throttle valve 43, as the flow rate control valve. That is, the cylinder intake air amount is controlled in a manner described below, by changing at least one of the opening timing and the closing timing of the intake valve 32 using the intake valve drive device 33.

(1) When the STA signal, which is the start instruction signal, is generated, the target throttle valve opening amount TAtgt to the initial opening amount TA0 (the opening amount when the throttle valve is fully open). Consequently, the throttle valve actuator 43a drives the throttle valve 43, and thus, the throttle valve 43 is fully opened.

(2) In this situation, the CPU 71 opens the intake valve 32 for each cylinder at an initial intake valve opening timing IO0, and closes the intake valve 32 for each cylinder at an initial intake valve closing timing IC0, in accordance with the intake stroke in the cylinder, using the intake valve drive device 33. The initial intake valve opening timing IO0 and the initial intake valve closing timing IC0 are set in advance so that the maximum amount of the air is taken into each cylinder. The processes described in (1) and (2) are executed at a timing equivalent to a timing after step 210.

(3) After the cylinders are discriminated, the absolute crank angle $\theta$ is set, and the fuel property determination cylinder is selected, the CPU 71 opens the intake valve 32 for each cylinder at a first intake valve opening timing IO1, and closes the intake valve 32 for each cylinder at a first intake valve closing timing IC1, in accordance with the intake stroke in the cylinder, using the intake valve drive device 33. The first intake valve opening timing IO1 and the first intake valve closing timing IC1 are set in advance so that the amount of the air taken into each cylinder is equal to the first predetermined air amount. The process described in (3) is executed at a timing equivalent to a timing after step 230 in FIG. 2. The throttle valve 43 is maintained in the fully open state. Consequently, the intake air amount in the fuel property determination cylinder quickly becomes equal to "the first predetermined air amount".

(4) After the fuel property is determined (that is, after the fuel property determination flag XH is set to "1"), the CPU 71 opens the intake valve 32 for each cylinder at a second intake valve opening timing IO2, and closes the intake valve 32 for each cylinder at a second intake valve closing timing IC2, in accordance with the intake stroke in the cylinder, using the intake valve drive device 33. The second intake valve opening timing IO2 and the second intake valve closing timing IC2 are set in advance so that the amount of the air taken into each cylinder becomes largest. The process described in (4) is executed at a timing equivalent to a timing after step 260 in FIG 2. In this stage, the opening amount of the throttle valve 43 is changed to the normal opening amount h (THW) as in step 260 in FIG. 2.

Thus, the first control apparatus in the modified example changes the amount of the air taken into the cylinder, by changing at least one of the opening timing and the closing timing of the intake valve 32. Thus, the air in the first predetermined air amount is introduced into the cylinder in which the piston enters the intake stroke first among the pistons in all the cylinders after the cylinders are discriminated (or the cylinder in which the piston enters the intake stroke in a relatively short time after the cylinders are discriminated). Consequently, the first control apparatus in the modified example can select, as. "the fuel property determination cylinder (the specific cylinder)", the cylinder in which the piston enters the intake stroke first among the pistons in all the cylinders after the cylinders are discriminated (or the cylinder in which the piston enters the intake stroke in a relatively short time after the cylinders are discriminated)". Thus, it is possible to more quickly determine the fuel property, and to advance the timing at which the initial combustion for autonomous operation is caused (the timing at which the engine 10 starts to autonomously operate). That is, it is possible to determine the fuel property, and to improve the start performance of the engine 10. One of the opening timing and the closing timing of the intake valve 32 may be a fixed timing, as long as the amount of the air taken into the cylinder can be changed.

[Second embodiment] Next, a control apparatus for an internal combustion engine according to a second embodiment of the invention (hereinafter, may be referred to as "second control apparatus") will be described. The throttle valve 43 of the second control apparatus is connected to the accelerator pedal 81 by a wire so that the throttle valve 43 is operated according to an operation of the accelerator pedal 81. Further, the second control apparatus includes a bypass passage that bypasses the throttle valve 43; and a known idling speed control valve (hereinafter, referred to as "ISC valve") provided in the bypass passage. The bypass passage constitutes a part of the intake passage. The ISC valve changes an opening sectional area of the bypass passage (accordingly, a gross sectional area of the intake passage) according to an instruction signal from the CPU 71 of the second control apparatus. That is, the ISC valve is driven so that the opening amount of the ISC valve is equal to a target ISC valve opening amount set by the CPU 71.

When the start instruction signal (STA signal) is generated, the above-described first control apparatus increases the amount of the air taken into each cylinder, by making the opening amount of the throttle valve 43 equal to the initial opening amount (the maximum opening amount) TA0. The second control apparatus differs from the first control apparatus in that when the start instruction signal (STA signal) is generated, the second control apparatus injects a small amount of the fuel for each cylinder, and the air-fuel mixture including the fuel is ignited and combusted at "an extremely advanced ignition timing" in the cylinder in which the air-fuel mixture including the fuel is being compressed. The extremely advanced ignition timing is an ignition timing that is advanced relative to the Minimum Spark Advance for Best Torque (MBT) timing at which the maximum torque is generated by the engine. Also, such combustion may be referred to as "small combustion".

Thus, if a small amount of the air is taken into each cylinder after the start instruction signal (STA signal) is generated, combustion gas is generated due to the small combustion in one of the cylinders. Accordingly, in the cylinder in which the small combustion is caused, the pressure becomes extremely high due to the compression operation toward the compression top dead center, as compared to the pressures in the other cylinders. Further, the second control apparatus causes the small combustion at "the extremely advanced ignition timing". Thus, even when the small combustion is caused, the amount of fluctuation in the torque generated by the engine 10 is maintained at a small value.

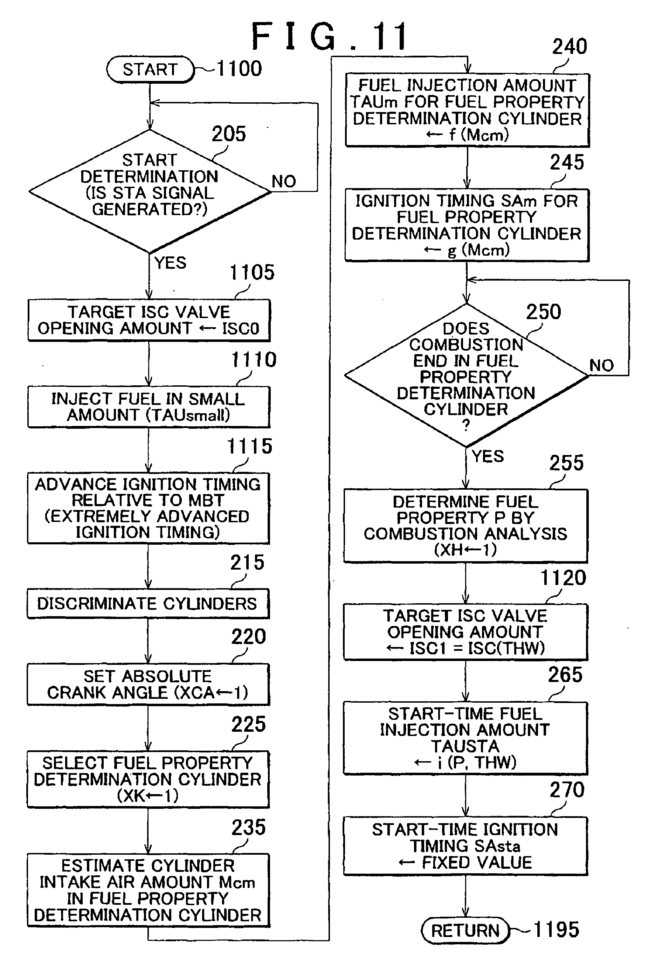

Hereinafter, the actual operation of the second control apparatus will be described. When the position of the ignition key switch 82 is changed from the off position to the on position or the start position, the CPU 71 of the second control apparatus sequentially executes processes shown in a flowchart in FIG 11. In FIG 11, the same or corresponding steps as those in FIG 2 are denoted by the same step numbers as in FIG 2, and the detailed description thereof will be omitted.

The CPU 71 starts the routine in FIG. 11 from step 1100, and proceeds to step 205. In step 205, the CPU 71 monitors whether the start ignition signal (STA signal) is generated. When the driver changes the position of the ignition key switch 82 to the start position, and therefore, the STA signal is generated, the starter 83 starts cranking the engine 10. The starter 83 continues to crank the engine 10 until the position of the ignition key switch 82 is returned from the start position to the on position, and accordingly, the STA signal disappears.

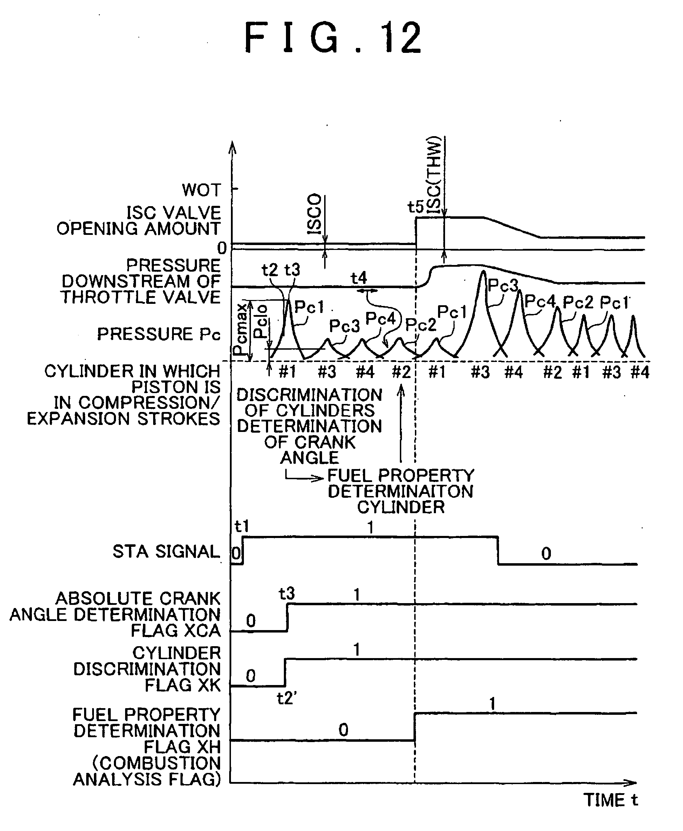

When the start instruction signal (STA signal) is generated, the CPU 71 makes an affirmative determination in step 205, and proceeds to step 1105. In step 1105, the CPU 71 sets the target ISC valve opening amount to an initial opening amount ISC0 so that an opening amount of the ISC valve (ISC valve opening amount) is equal to the initial opening amount ISC0. As shown in FIG. 12, the initial opening amount ISC0 is slightly larger than the opening amount ("0") when the ISC valve is fully closed. When a start operation is performed, the accelerator pedal 81 is not operated. Accordingly, the throttle valve is fully closed, that is, the throttle valve opening amount is "0". Consequently, the amount of the air taken into the cylinder by cranking is small. The initial opening amount ISC0 is set in advance so that the air in the first predetermined air amount is taken into each cylinder. FIG. 12 is a time chart showing parameters when the piston in the cylinder #1 moves from the compression bottom dead center to reach the compression top dead center first among the pistons in all the cylinders, after cranking is started.

Next, the CPU 71 proceeds to step 1110. In step 1110, the CPU 71 causes the injectors 39 provided for the cylinders to inject the fuel in an extremely small amount (a fuel injection amount TAUsmall) simultaneously. Next, the CPU 71 proceeds to step 1115. In step 1115, the CPU 71 sets the ignition timing to the extremely advanced ignition timing. The extremely advanced ignition timing is an ignition timing that is advanced relative to the Minimum Spark Advance for Best Torque (MBT) timing. In the embodiment, the extremely advanced ignition timing is set to "45 degrees CA before the compression top dead center" that is considerably advanced relative to the normal MBT timing.

More specifically, the CPU 71 monitors whether the pressure in one of the cylinders exceeds a predetermined low value Pclo. Immediately after the pressure in one of the cylinders exceeds the predetermined low value Pclo, the CPU 71 causes the ignition plugs 37 for the cylinders to generate sparks simultaneously (or the CPU 71 causes only the ignition plug 37 for the cylinder provided with the cylinder pressure sensor 65 that detects the pressure that exceeds the predetermined low value Pclo to generate spark). "The predetermined low value Pclo" is set to the minimum value that can be reached by the pressure in the cylinder in which the piston is in the compression stroke at 45 degrees CA before the compression top dead center (or a value obtained by adding a predetermined small value to the minimum value), when the throttle valve 43 is fully closed and the opening amount of the ISC valve is set to the initial opening amount ISC0.

In the engine in which there is a sufficient time between the fuel injection and the extremely advanced ignition timing, the CPU 71 may monitor whether the pressure in one of the cylinders exceeds the predetermined low value Pclo; and immediately after the pressure in one of the cylinders exceeds the predetermined low value Pclo, the CPU 71 may cause only the injector 39 for the cylinder provided with the cylinder pressure sensor 65 that detects the pressure that exceeds the predetermined low value Pclo to inject the fuel in the extremely small amount (the fuel injection amount TAUsmall), and then, may cause only the ignition plug 37 for the cylinder to generate a spark.

In this case, in the cylinder in which the piston is in the compression stroke, the small combustion is caused. Accordingly, burned gas is generated in the cylinder, and therefore, the pressure in the cylinder becomes significantly high as compared to the pressures in the other cylinders. Further, the burned gas is greatly compressed as the compression stroke proceeds in the cylinder. Accordingly, the pressure in the cylinder reaches the maximum value that is a large value, at the compression top dead center in the cylinder, as shown by the time point t3 in FIG. 12 (that is, the waveform of the pressure in the cylinder is a sharp-pointed waveform).

Next, the CPU 71 discriminates the cylinders in step 215. The second control apparatus actually discriminates the cylinders to perform ignition before step 215 is executed, the discrimination of the cylinders is confirmed in step 215.

Next, the CPU 71 proceeds to step 220. In step 220, the CPU 71 sets the absolute crank angle $\theta$ by detecting the time point at which the pressure Pc reaches the maximum value Pcmax in the cylinder in which the piston is in the compression stroke (i.e., the cylinder in which the small combustion is caused). Then, the CPU 71 proceeds to step 225. In step 225, the CPU 71 selects the fuel property determination cylinder. In the example shown in FIG 12, the CPU 71 selects the cylinder #2 as the fuel property determination cylinder.

Further, the CPU 71 estimates the intake air amount Mcm in the fuel property determination cylinder in step 235. In step 240, the CPU 71 sets the amount of the fuel to be supplied to the fuel property determination cylinder (the first predetermined fuel amount TAUm). When the absolute crank angle $\theta$ is equal to the predetermined crank angle (the fuel injection crank angle $\theta$inj), the CPU 71 causes the injector 39 provided for the fuel property determination cylinder to inject the fuel in the first predetermined fuel amount TAUm. Next, the CPU 71 proceeds to step 245. In step 245, the CPU 71 sets the ignition timing SAm for the fuel property determination cylinder, and causes the ignition plug 37 to generate a spark when the crank angle in the fuel property determination cylinder is equal to the ignition timing SAm.

Consequently, the combustion for determining the fuel property is caused in the fuel property determination cylinder (the cylinder #2 in the example in FIG. 12). The air-fuel mixture used for the combustion is the above-described "air-fuel mixture that includes the fuel in the first predetermined fuel amount TAUm and the air in the first predetermined air amount Mcm (the fuel property determination mixture)". Up to this time point, the throttle valve 43 is maintained in the fully-closed state, and the opening amount of the ISC valve is maintained at the initial opening amount ISC0.

Then, in step 250, the CPU 71 determines the amount of heat generated per unit mass of the fuel (= Qsum / TAUm), based on the combustion of the fuel property determination mixture in the fuel property determination cylinder. In step 255, the CPU 71 determines the fuel property P (the alcohol concentration P) based on the amount of heat generated per unit mass of the fuel.

Then, the CPU 71 proceeds to step 1120. In step 1120, the CPU 71 sets the target ISC valve opening amount to the normal opening amount ISC (THW) corresponding to the coolant temperature THW detected by the coolant temperature sensor 66 so that the opening amount of the ISC valve is equal to the normal opening amount ISC (THW) (refer to the time point t5 in FIG. 12). In the embodiment, the normal opening amount ISC (THW) is set to increase as the coolant temperature THW decreases.

Then, in step 265 and step 270, the CPU 71 executes a normal start control. Consequently, in the example shown in FIG 12, the initial combustion for autonomous operation is caused in the cylinder #3, and thus, the engine 10 is started.

As described above, the second control apparatus includes the crank angle sensor 64 that generates a signal each time the crankshaft 24 is rotated by a unit angle; the fuel injection device (injector 39) that injects the fuel to be supplied to each cylinder; and the ignition device (the ignition plug 37 and the igniter 38) that is provided for each cylinder, and that generates a spark in response to the ignition signal.

Then, when the start instruction signal (STA signal) is detected, the second control apparatus causes the fuel injection device to inject the fuel for each cylinder once (refer to step 1110 in FIG. 11), and transmits the ignition signal to the ignition device so that the air-fuel mixture including the fuel is ignited and combusted at the extremely advanced ignition timing that is advanced relative to the MBT timing at which the maximum torque is generated by the engine (refer to step 1115 in FIG 11).

Further, the second control apparatus includes "the reference signal identification device (refer to step 220 in FIG. 11 and the routine in FIG. 6)". The reference signal identification device monitors the plurality of pressures Pc detected by the plurality of cylinder pressure sensors 65, and thus, detects the time point at which the pressure detected by one of the cylinder pressure sensors 65 reaches the maximum value Pcmax. The reference signal identification device identifies the signal generated by the crank angle sensor 64 at the time point at which the maximum value Pcmax is detected, as "the crank angle reference signal generated by the crank angle sensor 64" at the compression top dead center in "the cylinder in which the pressure reaches the maximum value Pcmax".

In addition, the second control apparatus includes the fuel injection control device (refer to step 240 in FIG 11). The fuel injection control device sets "the absolute crank angle $\theta$ of the engine" based on the determined crank angle reference signal and the signal from the crank angle sensor 64. When the determined absolute crank angle $\theta$ is equal to "the predetermined fuel injection crank angle $\theta$inj for injecting the fuel in the first predetermined fuel amount TAUm for the fuel property determination cylinder (the specific cylinder)", the fuel injection control device causes the injector 39 for the fuel property determination cylinder to inject the fuel in "the first predetermined fuel amount TAUm".

Thus, after cranking is started, first, the air-fuel mixture is combusted in one of the cylinders at the extremely advanced ignition timing, and then, a large amount of burned gas generated due to the combustion is compressed in the cylinder in which the piston is in the compression stroke. Accordingly, the pressure in the cylinder reaches the maximum value that is a large value, at the compression top dead center in the cylinder. However, the combustion is the small combustion caused by ignition at the extremely advanced ignition timing, and torque generated by the engine 10 is extremely low. Therefore, almost no vibration due to fluctuation in the torque of the engine 10 is caused.

Further, the cylinder pressures detected by the plurality of cylinder pressure sensors are monitored, and the time point, at which the pressure detected by one of the cylinder pressure sensors reaches the maximum value Pcmax, is detected. The signal generated by the crank angle sensor at the time point at which the maximum value Pcmax is detected is identified as the crank angle reference signal. Because the detected maximum value Pcmax is a large value due to the burned gas, it is possible to accurately detect the compression top dead center in the cylinder in which the piston is in the compression stroke. In other words, it is possible to accurately identify the crank angle reference signal, immediately after the start instruction signal is generated.

Then, the absolute crank angle $\theta$ is set based on the determined crank angle reference signal and the signal from the crank angle sensor 64. When the set absolute crank angle is equal to the predetermined fuel injection crank angle for injecting the fuel in the first predetermined fuel amount, the fuel in the first predetermined fuel amount is injected. Thus, it is possible to appropriately supply the fuel in the first predetermined fuel amount to the fuel property determination cylinder.

As described above, the control apparatus for an internal combustion engine according to each of the above-described embodiments of the invention accurately and quickly determines the fuel property at the time of start of the engine 10. The invention is not limited to each of the above-described embodiments. Various modified examples may be employed in the scope of the invention. For example, in each of the above-described embodiments, the injector 39 is a direct injection injector that injects the fuel directly into the combustion chamber 25. However, instead of, or in addition to the direct injection injector, the injector 39 may be an intake port injection injector that injects the fuel to the intake port 31.

Also, in each of the embodiments, the cylinders are discriminated before the compression top dead center is detected by detecting the maximum value Pcmax of the cylinder pressure. However, the cylinders may be discriminated (i.e., the stroke in which the piston in each cylinder is positioned may be determined) when the compression top dead center is detected by detecting the maximum value Pcmax of the cylinder pressure, and the fuel property determination cylinder may be selected based on the discrimination of the cylinders. Further, the crank angle sensor 64 may be configured so that the crank angle sensor 64 outputs a pulse signal each time the crankshaft 24 is rotated by a unit rotational angle (for example, 1 degree CA), and does not output a pulse signal each time that crankshaft 24 is rotated by a predetermined rotational angle larger than the unit rotational angle (for example, 90 degrees, 180 degrees, and 360 degrees CA).

**Claims**

1. A control apparatus for an internal combustion engine, **characterized by** comprising:

   a first cylinder pressure sensor (65) and a second cylinder pressure sensor that are respectively provided in a first cylinder and a second cylinder of a multi-cylinder internal combustion engine, and that detect pressures in the first cylinder and the second cylinder, respectively;
   a cranking device (83) that cranks the engine in response to a start instruction signal that starts the engine;
   a mixture control device (71) that forms an air-fuel mixture that includes fuel in a first predetermined fuel amount (TAUm) and air in a first predetermined air amount (Mcm) so that torque that does not make the engine autonomously operate is generated, and combusts the air-fuel mixture in the first cylinder, before combustion, which generates torque that makes the engine autonomously operate, is caused in the second cylinder, when the engine is cranked; and
   a determination device (71) that determines an amount of heat generated per unit mass of the fuel included in the air-fuel mixture when the air-fuel mixture is combusted in the first cylinder, based on the detected pressure in the first cylinder, and determines a property of the fuel based on the determined amount of generated heat.

2. The control apparatus according to claim 1, **characterized by** further comprising:

   at least one flow rate control valve (43, 33) that adjusts an amount of air taken into the first cylinder and an amount of the air taken into the second cylinder; and
   a first fuel injection device (39) that injects the fuel to be supplied to the first cylinder, and a second fuel injection device that injects the fuel to be supplied to the second cylinder,
   wherein:

      when the start instruction signal is detected, the mixture control device (71) prevents injection of the fuel, and controls the at least one flow rate control valve so that the amount of the air taken into each of the first cylinder and the second cylinder is larger than the first predetermined air amount;
      the mixture control device (71) includes a first cylinder selection device; and
      when the detected pressure in the second cylinder increases for a predetermined time or longer, or the detected pressure in the second cylinder increases to a value equal to or above a predetermined value, the first cylinder selection device determines that a piston in the second cylinder is in a compression stroke, and selects, as the first cylinder, a cylinder in which a piston enters an intake stroke after a time point at which the piston in the second cylinder reaches a compression top dead center.

3. The control apparatus according to claim 1, **characterized by** further comprising:

   at least one flow rate control valve (43, 33) that adjusts an amount of air taken into the first cylinder and an amount of the air taken into the second cylinder;
   a crank angle sensor (64) that generates a signal each time a crankshaft of the engine is rotated by a unit angle;
   a first fuel injection device (39) that injects the fuel to be supplied to the first cylinder, and a second fuel injection device that injects the fuel to be supplied to the second cylinder,
   wherein:

      when the start instruction signal is detected, the mixture control device (71) prevents injection of the fuel, and controls the at least one flow rate control valve so that the amount of the air taken into each of the first cylinder and the second cylinder is larger than the first predetermined air amount;
      the mixture control device includes a reference signal identification device and a fuel injection control device; and
      the reference signal identification device detects a time point at which the detected pressure in the second cylinder reaches a maximum value, and identifies a signal generated by the crank angle sensor at the time point at which the maximum value is detected, as a crank angle reference signal generated by the crank angle sensor at the compression top dead center in the second cylinder; and
      the fuel injection control device sets an absolute crank angle of the engine based on the crank angle reference signal and a signal from the crank angle sensor, and controls the first fuel injection device so that the first fuel injection device injects the fuel in the first predetermined fuel amount for the first cylinder, when the absolute crank angle is equal to a predetermined fuel injection crank angle for injecting the fuel in the first predetermined fuel amount for the first cylinder.

**4.** The control apparatus according to claim 3, **characterized in that** the mixture control device (71) includes an intake air amount decrease device that controls the flow rate control valve so that the amount of the air taken into the first cylinder is equal to the first predetermined air amount (TAUm) during a period from when the crank angle reference signal is identified until when the intake stroke in the first cylinder ends.

**5.** The control apparatus according to any one of claims 1 to 4, **characterized in that** the mixture control device (71) includes a first cylinder fuel amount setting device that determines an amount of air taken into the first cylinder, and sets the first predetermined fuel amount (Mcm) based on the determined amount of the air.

**6.** The control apparatus according to any one of claims 1 to 5, **characterized by** further comprising
a first ignition device (37, 38) that is provided for the first cylinder, and that generates a spark in a combustion chamber of the first cylinder in response to an ignition signal, and a second ignition device that is provided for the second cylinder, and that generates a spark in a combustion chamber of the second cylinder in response to the ignition signal,
wherein the mixture control device transmits the ignition signal to the first ignition device so that the air-fuel mixture in the first cylinder, and that includes the fuel in the first predetermined fuel amount and the air in the first predetermined air amount is ignited and combusted at an ignition timing after a compression top dead center in the first cylinder.

**7.** The control apparatus according to any one of claims 2 to 6, **characterized in that** the flow rate control valve is an intake valve (32) for the first cylinder, and at least one of an opening timing and a closing timing of the intake valve is changeable.

**8.** The control apparatus according to claim 1, **characterized by** further comprising:

a crank angle sensor (64) that generates a signal each time a crankshaft of the engine is rotated by a unit angle;
a first fuel injection device (39) that injects the fuel to be supplied to the first cylinder, and a second fuel injection device that injects the fuel to be supplied to the second cylinder; and
a first ignition device (37, 38) that is provided for the first cylinder, and that generates a spark in a combustion chamber of the first cylinder in response to an ignition signal, and a second ignition device that is provided for the second cylinder, and that generates a spark in a combustion chamber of the second cylinder in response to the ignition signal,
wherein:

when the start instruction signal is detected, the fuel is injected for each of the first cylinder and the second cylinder once;
the mixture control device (71) transmits the ignition signal to each of the first ignition device and the second ignition device so that the air-fuel mixture that includes the fuel is ignited and combusted at an extremely advanced ignition timing that is advanced relative to a minimum spark advance for best torque at which maximum torque is generated by the engine;
the mixture control device includes a reference signal identification device and a fuel injection control device;
the reference signal identification device detects a time point at which the detected pressure in the second cylinder reaches a maximum value, and identifies a signal generated by the crank angle sensor at the time point at which the maximum value is detected, as a crank angle reference signal generated by the crank angle sensor at the compression top dead center in the second cylinder, and
the fuel injection control device sets an absolute crank angle of the engine based on the crank angle reference signal and a signal from the crank angle sensor, and controls the first fuel injection device so that the first fuel injection device injects the fuel in the first predetermined fuel amount for the first cylinder, when the absolute crank angle is equal to a predetermined fuel injection crank angle for injecting the fuel in the first predetermined fuel amount for the first cylinder.

**9.** The control apparatus according to claim 8, **characterized by** further comprising
an idling speed control valve provided in a passage that bypasses a throttle valve, wherein when the start instruction signal is detected, the mixture control device (71) controls the idling speed control valve so that the amount of the air taken into each of the first cylinder and the second cylinder is equal to the first predetermined air amount.

**10.** The control apparatus according to any one of claims 1 to 9, **characterized by** further comprising
a start-time fuel injection control device that sets a start-time fuel injection amount required to make the engine autonomously operate according to the property of the fuel as determined, and controls the first fuel injection device (39) and the second fuel injection device so that the first fuel injection device injects the fuel in the set start-time fuel injection amount for the first cylinder, and the second fuel injection device injects the fuel in the set start-time fuel injection amount for the second cylinder.

**11.** A control method for an internal combustion engine that includes a first cylinder and a second cylinder, **characterized by** comprising:

cranking (S205) the engine in response to a start instruction signal that starts the engine;

forming (S230, 235, 240) and combusting (S245) an air-fuel mixture that includes fuel in a first predetermined fuel amount and air in a first predetermined air amount so that torque that does not make the engine autonomously operate is generated in the first cylinder, after the engine starts to be cranked, and before combustion, which generates torque that makes the engine autonomously operate, is caused in the second cylinder;

determining an amount of heat generated per unit mass of the fuel included in the air-fuel mixture when the air-fuel mixture is combusted in the first cylinder, based on detected pressure in the first cylinder; and

determining (S255) a property of the fuel based on the determined amount of generated heat.

**12.** The control method according to claim 11, **characterized by** further comprising:

preventing injection of the fuel for each of the first cylinder and the second cylinder, when the start instruction signal is detected;

supplying the air in an amount larger than the first predetermined air amount to each of the first cylinder and the second cylinder;

determining that a piston in the second cylinder is in a compression stroke, when detected pressure in the second cylinder increases for a predetermined time or longer, or increases to a value equal to or above a predetermined value; and

selecting, as the first cylinder, a cylinder in which a piston enters an intake stroke after a time point at which the piston in the second cylinder reaches a compression top dead center.

**13.** The control method according to claim 11, **characterized by** further comprising:

preventing injection of the fuel for each of the first cylinder and the second cylinder, when the start instruction signal is detected;

supplying the air in an amount larger than the first predetermined air amount to each of the first cylinder and the second cylinder;

detecting a time point at which the detected pressure in the second cylinder reaches a maximum value;

identifying a signal generated by a crank angle sensor at the time point at which the maximum value is detected, as a crank angle reference signal generated by the crank angle sensor at a compression top dead center in the second cylinder;

setting an absolute crank angle of the engine based on the crank angle reference signal and a signal from the crank angle sensor; and

injecting the fuel in the first predetermined fuel amount for the first cylinder, when the absolute crank angle is equal to a predetermined fuel injection crank angle for injecting the fuel in the first predetermined fuel amount for the first cylinder.

**14.** The control method according to claim 11, **characterized by** further comprising:

injecting the fuel for each of the first cylinder and the second cylinder once, when the start instruction signal is detected;

igniting and combusting the air-fuel mixture that includes the injected fuel, at an extremely advanced ignition timing that is advanced relative to a minimum spark advance for best torque at which maximum torque is generated by the engine;

detecting a time point at which detected pressure in the second cylinder reaches a maximum value; and

identifying a signal generated by a crank angle sensor at the time point at which the maximum value is detected, as a crank angle reference signal generated by the crank angle sensor at a compression top dead center in the second cylinder;

setting an absolute crank angle of the engine based on the crank angle reference signal and a signal from the crank angle sensor; and

injecting the fuel in the first predetermined fuel amount for the first cylinder, when the absolute crank angle is equal to a predetermined fuel injection crank angle for injecting the fuel in the first predetermined fuel amount for the first cylinder.

**Patentansprüche**

1. Steuergerät für eine Brennkraftmaschine, **dadurch gekennzeichnet dass**, es folgendes aufweist:

einen ersten Zylinderdrucksensor (65) und einen zweiten Zylinderdruckssensor, die jeweils in einem ersten Zylinder und einem zweiten Zylinder einer mehrzylindrigen Brennkraftmaschine vorgesehen sind, und die jeweils Drücke in dem ersten Zylinder und dem zweiten Zylinder erfassen;
eine Ankurbelvorrichtung (83), die die Kraftmaschine in Antwort auf ein Startanweisungssignal ankurbelt, das die Kraftmaschine startet;
eine Gemischsteuervorrichtung (71), die ein Luft-Kraftstoff-Gemisch bildet, das Kraftstoff einer ersten vorbestimmten Kraftstoffmenge (TAUm) und Luft einer ersten vorbestimmten Luftmenge (Mcm) beinhaltet, sodass ein Drehmoment erzeugt wird, das die Kraftmaschine nicht selbstständig arbeiten lässt, und das Luft-Kraftstoff-Gemisch in dem ersten Zylinder verbrennt, bevor die Verbrennung, die ein Drehmoment erzeugt, das die Kraftmaschine selbstständig arbeiten lässt, in dem zweiten Zylinder bewirkt wird, wenn die Kraftmaschine angekurbelt wird; und
eine Bestimmungsvorrichtung (71), die eine Wärmemenge bestimmt, die pro Einheitsmasse des in dem Luft-Kraftstoff-Gemisch erhaltenen Kraftstoffs erzeugt wird, wenn das Luft-Kraftstoff-Gemisch in dem ersten Zylinder verbrannt wird, und zwar auf Grundlage des erfassten Drucks in dem ersten Zylinder, und die eine Eigenschaft des Kraftstoff auf Grundlage der bestimmten Menge erzeugter Wärme bestimmt.

2. Steuergerät gemäß Anspruch 1, **dadurch gekennzeichnet, dass** es ferner folgendes aufweist:

zumindest ein Strömungsratensteuerventil (43, 33), das eine Menge von in den ersten Zylinder eingelassener Luft und eine Menge von in den zweiten Zylinder eingelassener Luft einstellt; und
eine erste Kraftstoffeinspritzvorrichtung (39), die den zu dem ersten Zylinder zuzuführenden Kraftstoff einspritzt, und eine zweite Kraftstoffeinspritzvorrichtung, die den zu dem zweiten Zylinder zuzuführenden Kraftstoff einspritzt, wobei
dann, wenn das Startanweisungssignal erfasst wird, die Gemischsteuervorrichtung (71) die Einspritzung des Kraftstoffs verhindert und das zumindest eine Strömungsratensteuerventil derart steuert, dass die Menge der sowohl in den ersten Zylinder als auch in den zweiten Zylinder eingelassenen Luft größer als die erste vorbestimmte Luftmenge ist;
die Gemischsteuervorrichtung (71) eine erste Zylinderwählvorrichtung aufweist; und
dann, wenn der erfasste Druck in dem zweiten Zylinder für eine vorbestimmte Zeitspanne oder länger zunimmt oder der erfasste Druck in dem zweiten Zylinder auf einen Wert zunimmt, der gleich wie oder größer als ein vorbestimmter Wert ist, die erste Zylinderwählvorrichtung bestimmt, dass sich ein Kolben in dem zweiten Zylinder in einem Kompressionstakt befindet, und als den ersten Zylinder einen Zylinder wählt, in dem ein Kolben einen Einlasstakt nach einem Zeitpunkt betritt, zu dem der Kolben in dem zweiten Zylinder einen oberen Kompressionstotpunkt erreicht.

3. Steuergerät gemäß Anspruch 1, **dadurch gekennzeichnet, dass** es ferner folgendes aufweist:

zumindest ein Strömungsratensteuerventil (43, 33), das eine Menge von in den ersten Zylinder eingesaugter Luft und eine Menge von in den zweiten Zylinder eingesaugter Luft einstellt;
einen Kurbelwinkelsensor (64), der jedes Mal dann ein Signal erzeugt, wenn eine Kurbelwelle der Kraftmaschine um einen Einheitswinkel gedreht wird;
eine erste Kraftstoffeinspritzvorrichtung (39), die den zu dem ersten Zylinder zuzuführenden Kraftstoff einspritzt, und eine zweite Kraftstoffeinspritzvorrichtung, die den zu dem zweiten Zylinder zuzuführenden Kraftstoff einspritzt,
wobei dann, wenn das Startanweisungssignal erfasst wird, die Gemischsteuervorrichtung (71) das Einspritzen des Kraftstoffs verhindert und das zumindest eine Strömungsratensteuerventil so steuert, dass die Menge der sowohl in den ersten Zylinder als auch den zweiten Zylinder eingelassenen Luft größer als die erste vorbestimmte Luftmenge ist;
die Gemischsteuervorrichtung eine Bezugssignalidentifikationsvorrichtung und eine Kraftstoffeinspritzsteuervorrichtung aufweist; und

die Bezugssignalidentifikationsvorrichtung einen Zeitpunkt erfasst, zu dem der erfasste Druck in dem zweiten Zylinder einen Maximalwert erreicht, und ein Signal, das durch den Kurbelwinkelsensor zu dem Zeitpunkt erzeugt wird, zu dem der Maximalwert erfasst wird, als ein durch den Kurbelwinkelsensor am oberen Kompressionstotpunkt in dem zweiten Zylinder erzeugtes Kurbelwinkelbezugssignal identifiziert; und

die Kraftstoffeinspritzsteuervorrichtung einen absoluten Kurbelwinkel der Kraftmaschine auf Grundlage des Kurbelwinkelbezugssignals und eines Signals von dem Kurbelwinkelsensor festlegt und die erste Kraftstoffeinspritzvorrichtung so steuert, dass die erste Kraftstoffeinspritzvorrichtung den Kraftstoff der ersten vorbestimmten Kraftstoffmenge für den ersten Zylinder einspritzt, wenn der absolute Kurbelwinkel gleich wie ein vorbestimmter Kraftstoffeinspritzkurbelwinkel zum Einspritzen des Kraftstoffs der ersten vorbestimmten Kraftstoffmenge für den ersten Zylinder ist.

4. Steuergerät gemäß Anspruch 3, **dadurch gekennzeichnet, dass** die Gemischsteuervorrichtung (71) eine Einlassluftmengenverringerungsvorrichtung hat, die das Strömungsratensteuerventil derart steuert, dass die Menge der in den ersten Zylinder eingelassenen Luft während einer Zeitspanne von der Identifikation des Kurbelwinkelbezugssignals bis zum Ende des Einlasstakts in dem ersten Zylinder gleich der ersten vorbestimmten Luftmenge (TAUm) ist.

5. Steuergerät gemäß einem der Ansprüche 1 bis 4, **dadurch gekennzeichnet, dass** die Gemischsteuervorrichtung (71) eine erste Zylinderkraftstoffmengenfestlegungsvorrichtung hat, die eine Menge der in den ersten Zylinder eingesaugten Luft bestimmt, und die erste vorbestimmte Kraftstoffmenge (Mcm) auf Grundlage der bestimmten Luftmenge festlegt.

6. Steuergerät gemäß einem der Ansprüche 1 bis 5, **dadurch gekennzeichnet, dass** es ferner folgendes aufweist:

eine erste Zündungsvorrichtung (37, 38), die für den ersten Zylinder vorgesehen ist, und die einen Funken in einer Brennkammer des ersten Zylinders in Antwort auf ein Zündsignal erzeugt, und eine zweite Zündvorrichtung, die für den zweiten Zylinder vorgesehen ist, und die einen Funken in einer Brennkammer des zweiten Zylinders in Antwort auf das Zündsignal erzeugt, wobei
die Gemischsteuervorrichtung das Zündsignal derart zu der ersten Zündvorrichtung überträgt, dass das Luft-Kraftstoff-Gemisch in dem ersten Zylinder, das den ersten der ersten vorbestimmten Kraftstoffmenge und die Luft der ersten vorbestimmten Luftmenge enthält, zu einer Zündzeitgebung nach einem oberen Kompressionstotpunkt in dem ersten Zylinder gezündet und verbrannt wird.

7. Steuergerät gemäß einem der Ansprüche 2 bis 6, **dadurch gekennzeichnet, dass** das Strömungsratensteuerventil ein Einlassventil (32) für den ersten Zylinder ist und zumindest eine Öffnungszeitgebung und/oder eine Schließzeitgebung des Einlassventils veränderlich ist.

8. Steuergerät gemäß Anspruch 1, **dadurch gekennzeichnet, dass** es ferner folgendes aufweist:

einen Kurbelwinkelsensor (64) der jedes Mal ein Signal erzeugt, wenn ein Kurbelwinkel der Kraftmaschine um einen Einheitswinkel gedreht wird;
eine erste Kraftstoffeinspritzvorrichtung (39), die den zu dem ersten Zylinder zuzuführenden Kraftstoff einspritzt, und eine zweite Kraftstoffeinspritzvorrichtung, die den zu dem zweiten Zylinder zuzuführenden Kraftstoff einspritzt, und
eine erste Zündvorrichtung (37, 38), die für den ersten Zylinder vorgesehen ist und die einen Funken in einer Brennkammer des ersten Zylinders in Antwort auf ein Zündsignal erzeugt, und eine zweite Zündvorrichtung, die für den zweiten Zylinder vorgesehen ist und die einen Funken in einer Brennkammer des zweiten Zylinders in Antwort auf das Zündsignal erzeugt, wobei
dann, wenn das Startanweisungssignal erfasst wird, der Kraftstoff sowohl für den ersten Zylinder als auch den zweiten Zylinder ein Mal eingespritzt wird;
die Gemischsteuervorrichtung (71) das Zündsignal sowohl zu der ersten Zündvorrichtung als auch zu der zweiten Zündvorrichtung so überträgt, dass das Luft-Kraftstoff-Gemisch, das den Kraftstoff aufweist, zu einer äußerst vorgerückten Zündzeitgebung gezündet und verbrannt wird, die mit Bezug auf eine minimale Funkenvorrückung für das beste Drehmoment, bei dem das maximale Drehmoment durch die Kraftmaschine erzeugt wird, vorgerückt ist;
die Gemischsteuervorrichtung eine Bezugssignalidentifikationsvorrichtung und eine Kraftstoffeinspritzsteuervorrichtung aufweist;
die Bezugssignalidentifikationsvorrichtung einen Zeitpunkt erfasst, an dem der erfasste Druck in dem zweiten Zylinder einen Maximalwert erreicht, und ein Signal, das durch den Kurbelwinkelsensor zu dem Zeitpunkt erzeugt wird, zu dem der maximale Wert erfasst wird, als ein Kurbelwinkelbezugssignal identifiziert, das an dem oberen Kompressionstotpunkt in dem zweiten Zylinder durch den Kurbelwinkelsensor erzeugt wird; und die Kraftstoffeinspritzsteuervorrichtung einen absoluten Kurbelwinkel der Kraftmaschine auf Grundlage des Kurbelwinkelbezugssignals und eines Signals von dem Kurbelwinkelsensor festlegt und die erste Kraftstoffeinspritzvorrichtung so steuert, dass die erste Kraftstoffeinspritzvorrichtung den Kraftstoff der ersten vorbestimmten Kraftstoffmenge für den ersten Zylinder einspritzt, wenn der absolute Kurbelwinkel gleich wie ein vorbestimmter Kraftstoffeinspritzkurbelwinkel zum Einspritzen des Kraftstoffs der ersten vorbestimmten Kraftstoffmenge für den ersten Zylinder ist.

9. Steuergerät gemäß Anspruch 8, **dadurch gekennzeichnet, dass** es ferner folgendes aufweist:

ein Leerlaufdrehzahlsteuerventil, das in einem Durchlass vorgesehen ist, der ein Drosselventil umgeht, wobei dann, wenn das Startanweisungssignal erfasst wird, die Gemischsteuervorrichtung (71) das Leerlaufdrehzahlsteuerventil so steuert, dass die Menge der sowohl in den ersten Zylinder als auch den zweiten Zylinder eingelassenen Luft gleich wie die erste vorbestimmte Luftmenge ist.

10. Steuergerät gemäß einem der Ansprüche 1 bis 9, **dadurch gekennzeichnet, dass** es ferner folgendes aufweist:

eine Startzeitkraftstoffeinspritzsteuervorrichtung, die eine Startzeitkraftstoffeinspritzmenge festlegt, die dafür erforderlich ist, die Kraftmaschine gemäß der Eigenschaft des Kraftstoffs wie bestimmt selbstständig arbeiten zu lassen, und die die erste Kraftstoffeinspritzvorrichtung (39) und die zweite Kraftstoffeinspritzvorrichtung so steuert, dass die erste Kraftstoffeinspritzvorrichtung den Kraftstoff in der festgelegten Startzeitkraftstoffeinspritzmenge für den ersten Zylinder einspritzt, und die zweite Kraftstoffeinspritzvorrichtung den Kraftstoff mit der festgelegten Startzeitkrafteinspritzmenge für den zweiten Zylinder einspritzt.

11. Steuerverfahren für eine Brennkraftmaschine, die einen ersten Zylinder und einen zweiten Zylinder aufweist, **dadurch gekennzeichnet, dass** es folgendes aufweist:

Ankurbeln (S205) der Kraftmaschine in Antwort auf ein Startanweisungssignal, das die Kraftmaschine startet; Ausbilden (S230, 235, 240) und Verbrennen (S245) eines Luft-Kraftstoff-Gemischs, das Kraftstoff einer ersten vorbestimmten Kraftstoffmenge und Luft einer ersten vorbestimmten Luftmenge aufweist, sodass in dem ersten Zylinder ein Drehmoment erzeugt wird, das die Kraftmaschine nicht selbstständig arbeiten lässt, nachdem das Ankurbeln der Kraftmaschine gestartet wurde und bevor in dem zweiten Zylinder eine Verbrennung bewirkt wird, die ein Drehmoment erzeugt, das die Kraftmaschine selbstständig arbeiten lässt; Bestimmen einer Wärmemenge, die pro Einheitsmasse des in dem Luft-Kraftstoff-Gemisch enthaltenen Kraftstoffs erzeugt wird, wenn das Luft-Kraftstoff-Gemisch in dem ersten Zylinder verbrannt wird, auf Grundlage des erfassten Drucks in dem ersten Zylinder; und Bestimmen (S255) einer Eigenschaft des Kraftstoffs auf Grundlage der bestimmen Menge der erzeugten Wärme.

12. Steuerverfahren gemäß Anspruch 11, **dadurch gekennzeichnet, dass** es ferner folgendes aufweist:

Verhindern der Einspritzung des Kraftstoffs sowohl für den ersten Zylinder als auch für den zweiten Zylinder, wenn das Startanweisungssignal erfasst wird; Zuführen der Luft einer Menge, die größer als die erste vorbestimmte Luftmenge ist, sowohl zu dem ersten Zylinder als auch zu dem zweiten Zylinder; Bestimmen, dass sich ein Kolben in dem zweiten Zylinder in einem Kompressionstakt befindet, wenn der erfasste Druck in dem zweiten Zylinder für eine vorbestimmte Zeitspanne oder länger zunimmt oder auf einen Wert zunimmt, der gleich wie oder größer als ein vorbestimmter Wert ist; und Auswählen eines Zylinders, in dem ein Kolben einen Einlasstakt nach einem Zeitpunkt betritt, zu dem der Kolben in dem zweiten Zylinder einen oberen Kompressionstotpunkt erreicht, als den ersten Zylinder.

13. Steuerverfahren gemäß Anspruch 11, **dadurch gekennzeichnet, dass** es ferner folgendes aufweist:

Verhindern der Einspritzung des Kraftstoffs sowohl für den ersten Zylinder als auch für den zweiten Zylinder, wenn das Startanweisungssignal erfasst wird; Zuführen der Luft einer Menge, die größer als die erste vorbestimmte Luftmenge ist, sowohl zu dem ersten Zylinder als auch zu dem zweiten Zylinder;

Erfassen eines Zeitpunkts, zu dem der erfasste Druck in dem zweiten Zylinder einen Maximalwert erreicht;

Identifizieren eines Signals, das durch einen Kurbelwinkelsensor zu dem Zeitpunkt erzeugt wird, zu dem der Maximalwert erfasst wird, als ein Kurbelwinkelbezugssignal, das durch den Kurbelwinkelsensor an einem oberen Kompressionstotpunkt in dem zweiten Zylinder erzeugt wird;

Festlegen eines absoluten Kurbelwinkels der Kraftmaschine auf Grundlage des Kurbelwinkelbezugssignals und eines Signals von dem Kurbelwinkelsensor; und

Einspritzen des Kraftstoffs der ersten vorbestimmten Kraftstoffmenge für den ersten Zylinder dann, wenn der absolute Kurbelwinkel gleich einem vorbestimmten Kraftstoffeinspritzkurbelwinkel zum Einspritzen des Kraftstoffs der ersten vorbestimmten Kraftstoffmenge für den ersten Zylinder ist.

**14.** Steuerverfahren gemäß Anspruch 11, **dadurch gekennzeichnet, dass** es ferner folgendes aufweist:

Einspritzen des Kraftstoffs sowohl für den ersten Zylinder als auch für den zweiten Zylinder ein Mal dann, wenn das Startanweisungssignal erfasst wird;

Zünden und Verbrennen des Luft-Kraftstoff-Gemischs, das den eingespritzten Kraftstoff enthält, zu einer äußerst vorgerückten Zündzeitgebung, die relativ zu einer minimalen Funkenvorrückung für das beste Drehmoment vorgerückt ist, bei der ein maximales Drehmoment durch die Kraftmaschine erzeugt wird;

Erfassen eines Zeitpunkts, zu dem der erfasste Druck in dem zweiten Zylinder einen Maximalwert erreicht; und

Identifizieren eines Signals, das durch einen Kurbelwinkelsensor zu dem Zeitpunkt erzeugt wird, zu dem der Maximalwert erfasst wird, als ein Kurbelwinkelbezugssignal, das durch den Kurbelwinkelsensor an einem oberen Kompressionstotpunkt in dem zweiten Zylinder erzeugt wird;

Festlegen eines absoluten Kurbelwinkels der Kraftmaschine auf Grundlage des Kurbelwinkelbezugssignals und eines Signals von dem Kurbelwinkelsensor; und

Einspitzen des Kraftstoffs der ersten vorbestimmten Kraftstoffmenge für den ersten Zylinder, wenn der absolute Kurbelwinkel gleich einem vorbestimmten Kraftstoffeinspritzkurbelwinkel zum Einspritzen des Kraftstoffs der ersten vorbestimmten Kraftstoffmenge für den ersten Zylinder ist.

## Revendications

**1.** Dispositif de commande pour un moteur à combustion interne, **caractérisé en ce qu'**il comprend :

un premier capteur de pression de cylindre (65) et un second capteur de pression de cylindre qui sont respectivement placés dans un premier cylindre et un second cylindre d'un moteur à combustion interne multicylindres, et qui détectent des pressions respectivement dans le premier cylindre et le second cylindre ;

un dispositif de lancement (83) qui lance le moteur en réponse à un signal d'instruction de démarrage qui démarre le moteur ;

un dispositif de commande de mélange (71) qui forme un mélange air-carburant qui inclut du carburant dans une première quantité de carburant prédéterminée (TAUm) et de l'air dans une première quantité d'air prédéterminée (Mcm) de telle manière qu'un couple qui ne fait pas fonctionner le moteur de manière autonome est généré, et fait brûler le mélange air-carburant dans le premier cylindre, avant qu'une combustion, qui génère un couple qui fait fonctionner le moteur de manière autonome, est causée dans le second cylindre, quand le moteur est lancé ; et

un dispositif de détermination (71) qui détermine une quantité de chaleur générée par unité de masse du carburant inclus dans le mélange air-carburant quand le mélange air-carburant est brûlé dans le premier cylindre, en fonction de la pression détectée dans le premier cylindre, et détermine une propriété du carburant en fonction de la quantité déterminée de chaleur générée.

**2.** Dispositif de commande selon la revendication 1, **caractérisé en ce qu'**il comprend en outre :

au moins une soupape de commande de débit (43, 33) qui règle une quantité d'air admise dans le premier cylindre et une quantité de l'air admis dans le second cylindre ; et

un premier dispositif d'injection de carburant (39) qui injecte le carburant à fournir au premier cylindre, et un second dispositif d'injection de carburant qui injecte le carburant à fournir au second cylindre,

dans lequel :

quand le signal d'instruction de démarrage est détecté, le dispositif de commande de mélange (71) empêche l'injection du carburant, et commande l'au moins une soupape de commande de débit de telle manière que la quantité d'air admise dans chacun du premier cylindre et du second cylindre est supérieure à la première quantité d'air prédéterminée ;

le dispositif de commande de mélange (71) inclut un dispositif de sélection de premier cylindre ; et

quand la pression détectée dans le second cylindre augmente pour un temps prédéterminé ou plus longtemps, ou la pression détectée dans le second cylindre augmente à une valeur supérieure ou égale à une valeur prédéterminée, le dispositif de sélection de premier cylindre détermine qu'un piston dans le second cylindre est dans une course de compression, et sélectionne, comme premier cylindre, un cylindre dans lequel un piston entre dans une course d'admission après un point de temps auquel le piston dans le second cylindre atteint un point mort haut de compression.

3.  Dispositif de commande selon la revendication 1, **caractérisé en ce qu'**il comprend en outre :

au moins une soupape de commande de débit (43, 33) qui règle une quantité d'air admise dans le premier cylindre et une quantité de l'air admis dans le second cylindre ;

un capteur d'angle de vilebrequin (64) qui génère un signal chaque fois qu'un vilebrequin du moteur est tourné d'un angle unitaire ;

un premier dispositif d'injection de carburant (39) qui injecte le carburant à fournir au premier cylindre, et un second dispositif d'injection de carburant qui injecte le carburant à fournir au second cylindre,

dans lequel :

quand le signal d'instruction de démarrage est détecté, le dispositif de commande de mélange (71) empêche l'injection du carburant, et commande l'au moins une soupape de commande de débit de telle manière que la quantité de l'air admis dans chacun du premier cylindre et du second cylindre est supérieure à la première quantité d'air prédéterminée ;

le dispositif de commande de mélange inclut un dispositif d'identification de signal de référence et un dispositif de commande d'injection de carburant ; et

le dispositif de sélection de signal de référence détecte un point de temps auquel la pression détectée dans le second cylindre atteint une valeur maximale, et identifie un signal généré par le capteur d'angle de vilebrequin au point de temps auquel la valeur maximale est détectée, comme un signal de référence d'angle de vilebrequin généré par le capteur d'angle de vilebrequin au point mort haut de compression dans le second cylindre ; et

le dispositif de commande d'injection de carburant règle un angle de vilebrequin absolu du moteur en fonction du signal de référence d'angle vilebrequin et d'un signal venant du capteur d'angle de

et commande premier dispositif carburant vilebrequin, et commande le premier dispositif d'injection de carburant de telle manière que le premier dispositif d'injection de carburant injecte le carburant dans la première quantité de carburant prédéterminée pour le premier cylindre, quand l'angle de vilebrequin absolu est égal à un angle vilebrequin d'injection de carburant prédéterminé pour injecter le carburant dans la première quantité de carburant prédéterminée pour le premier cylindre.

4.  Dispositif de commande selon la revendication 3, **caractérisé en ce que** le dispositif de commande de mélange (71) inclut un dispositif de diminution de quantité d'air d'admission qui commande la soupape de commande de débit de telle manière que la quantité de l'air admis dans le premier cylindre est égale à la première quantité d'air prédéterminée (TAUm) pendant une période allant de quand le signal de référence d'angle de vilebrequin est identifié jusqu'à quand la course d'admission dans le premier cylindre se termine.

5.  Dispositif de commande selon l'une quelconque des revendications 1 à 4, **caractérisé en ce que** le dispositif de commande de mélange (71) inclut un dispositif de réglage de quantité de carburant de premier cylindre qui détermine une quantité d'air admis dans le premier cylindre, et règle la première quantité de carburant prédéterminée (Mcm) en fonction de la quantité déterminée de l'air.

6.  Dispositif de commande selon l'une quelconque des revendications 1 à 5, **caractérisé en ce qu'**il comprend en outre :

un premier dispositif d'allumage (37, 38) qui est fourni pour le premier cylindre, et qui génère une étincelle dans une chambre de combustion du premier cylindre en réponse à un signal d'allumage, et un second dispositif d'allumage qui est fourni pour le second cylindre, et qui génère une étincelle dans une chambre de combustion du second cylindre en réponse au signal d'allumage,

dans lequel le dispositif de commande de mélange transmet le signal d'allumage au premier dispositif d'allumage de telle manière que le mélange air-carburant dans le premier cylindre, et cela inclut le carburant dans la première quantité de carburant prédéterminée et l'air dans la première quantité d'air prédéterminée est allumé et brûlé à un moment d'allumage après un point mort haut de compression dans le premier cylindre.

7.  Dispositif de commande selon l'une quelconque des revendications 2 à 6, **caractérisé en ce que** la soupape de commande de débit est une soupape d'admission (32) pour le premier cylindre, et au moins l'un d'un moment d'ouverture et d'un moment de fermeture de la soupape d'admission peut être modifié.

8.  Dispositif de commande selon la revendication 1, **caractérisé en ce qu'**il comprend en outre :

    un capteur d'angle de vilebrequin (64) qui génère un signal chaque fois qu'un vilebrequin du moteur est tourné d'un angle unitaire ;
    un premier dispositif d'injection de carburant (39) qui injecte le carburant à fournir au premier cylindre, et un second dispositif d'injection de carburant qui injecte le carburant à fournir au second cylindre ; et
    un premier dispositif d'allumage (37, 38) qui est fourni pour le premier cylindre, et qui génère une étincelle dans une chambre de combustion du premier cylindre en réponse à un signal d'allumage, et un second dispositif d'allumage qui est fourni pour le second cylindre, et qui génère une étincelle dans une chambre de combustion du second cylindre en réponse au signal d'allumage,
    dans lequel :

    quand le signal d'instruction de démarrage est détecté, le carburant est injecté pour chacun du premier cylindre et du second cylindre une fois ;
    le dispositif de commande de mélange (71) transmet le signal d'allumage à chacun du premier dispositif d'allumage et du second dispositif d'allumage de telle manière que le mélange air-carburant qui inclut le carburant est allumé et brûlé à un moment d'allumage extrêmement avancé qui est en avance par rapport à une avance d'étincelle minimale pour le meilleur couple auquel un couple maximal est généré par le moteur ;
    le dispositif de commande de mélange inclut un dispositif d'identification de signal de référence et un dispositif de commande d'injection de carburant ;
    le dispositif d'identification de signal de référence détecte un point de temps auquel la pression détectée dans le second cylindre atteint une valeur maximale, et identifie un signal généré par le capteur d'angle de vilebrequin au point de temps auquel la valeur maximale est détectée, comme un signal de référence d'angle de vilebrequin généré par le capteur d'angle de vilebrequin au point mort haut de compression dans le second cylindre ; et
    le dispositif de commande d'injection de carburant règle un angle de vilebrequin absolu du moteur en fonction du signal de référence d'angle de vilebrequin et d'un signal venant du capteur d'angle de vilebrequin, et commande le premier dispositif d'injection de carburant de telle manière que le premier dispositif d'injection de carburant injecte le carburant dans la première quantité de carburant prédéterminée pour le premier cylindre, quand l'angle de vilebrequin absolu est égal à un angle de vilebrequin d'injection de carburant prédéterminé pour injecter le carburant dans la première quantité de carburant prédéterminée pour le premier cylindre.

9.  Dispositif de commande selon la revendication 8, **caractérisé en ce qu'**il comprend en outre :

    une soupape de commande de ralenti placée dans un passage qui évite une soupape d'étranglement, dans lequel quand le signal d'instruction de démarrage est détecté, le dispositif de commande de mélange (71) commande la soupape de commande de ralenti de telle manière que la quantité d'air admis dans chacun du premier cylindre et du second cylindre est égale à la première quantité d'air prédéterminée.

10. Dispositif de commande selon l'une quelconque des revendications 1 à 9, **caractérisé en ce qu'**il comprend en outre un dispositif de commande d'injection de carburant au moment du démarrage qui règle une quantité d'injection de carburant au moment du démarrage nécessaire pour faire fonctionner le moteur de manière autonome selon la propriété du carburant telle que déterminée, et commande le premier dispositif d'injection de carburant (39) et le second dispositif d'injection de carburant de telle manière que le premier dispositif d'injection de carburant injecte le carburant dans la quantité d'injection de carburant au moment du démarrage réglée pour le premier cylindre et le second dispositif d'injection de carburant injecte le carburant dans la quantité d'injection de carburant au moment du démarrage réglée pour le second cylindre.

11. Procédé de commande pour un moteur à combustion interne qui inclut un premier cylindre et un second cylindre, **caractérisé en ce qu'**il comprend :

de lancer (S205) le moteur en réponse à un signal d'instruction de démarrage qui démarre le moteur ;

de former (S230, 235, 240) et brûler (S245) un mélange air-carburant qui inclut du carburant dans une première quantité de carburant prédéterminée et de l'air dans une première quantité d'air prédéterminée de telle manière qu'un couple qui ne fait pas fonctionner le moteur de manière autonome est généré dans le premier cylindre, après que le moteur commence à être lancé, et avant que la combustion, qui génère un couple qui fait fonctionner le moteur de manière autonome, est causée dans le second cylindre ;

déterminer une quantité de chaleur générée par unité de masse du carburant inclus dans le mélange air-carburant quand le mélange air-carburant est brûlé dans le premier cylindre, en fonction de la pression détectée dans le premier cylindre ; et

déterminer (S255) une propriété du carburant en fonction de la quantité déterminée de chaleur générée.

**12.** Procédé de commande selon la revendication 11, **caractérisé en ce qu'**il comprend en outre :

d'empêcher l'injection du carburant pour chacun du premier cylindre et du second cylindre, quand le signal d'injection de démarrage est détesté ;

d'alimenter l'air dans une quantité supérieure à la première quantité d'air prédéterminée vers chacun du premier cylindre et du second cylindre ;

de déterminer qu'un piston dans le second cylindre est dans une Procédé de compression, quand la pression détectée dans le second cylindre augmente pour un temps prédéterminé ou plus longtemps, ou augmente à une valeur supérieure ou égale une valeur prédéterminée ; et

de sélectionner, comme le premier cylindre, un cylindre dans lequel un piston entre dans une course d'admission après un Procédé de temps auquel le piston dans le second cylindre atteint un point mort haut de compression.

**13.** Procédé de commande selon la revendication 11, **caractérisé en ce qu'**il comprend en outre :

d'empêcher l'injection du carburant pour chacun du premier cylindre et du second cylindre, quand le signal d'instruction de démarrage est détesté ;

d'alimenter l'air dans une quantité supérieure à la première quantité de carburant prédéterminée vers chacun du premier cylindre et du second cylindre ;

de détecter un Procédé de temps auquel la pression détectée dans le second cylindre atteint une valeur maximal ;

d'identifier un signal généré par un capteur d'angle de vilebrequin au Procédé de temps auquel la valeur maximale est détectée, comme un Procédé de référence Procédé de vilebrequin généré par le capteur Procédé de vilebrequin à un point mort Procédé de compression dans le second cylindre ;

de régler un Procédé de vilebrequin absolu du moteur en fonction du signal de référence d'angle de vilebrequin et d'un signal venant du capteur d'angle de vilebrequin ; et

d'injecter le carburant dans la première quantité de carburant prédéterminée pour le premier cylindre, quand d'angle de vilebrequin absolu est égal à un d'angle de vilebrequin d'injection de carburant prédétermine pour injecter le carburant dans la première quantité de carburant prédéterminée pour le premier cylindre.

**14.** Procédé de commande selon la revendication 11, **caractérisé en ce qu'**il comprend en outre :

d'injecter le carburant pour chacun du premier cylindre et du second cylindre une fois, quand le signal d'instruction de démarrage est détecté ;

d'allumer et faire brûler le mélange air-carburant qui inclut le carburant injecté, à un moment d'allumage extrêmement avancé qui est en avance par rapport à une avance d'étincelle minimale pour un meilleur couple auquel le couple maximal est généré par le moteur ;

de détecter un point de temps auquel la pression détectée dans le second cylindre atteint une valeur maximale ; et

d'identifier un signal généré par un capteur d'angle de vilebrequin au point de temps auquel la valeur maximale est détectée, comme un signal de référence d'angle de vilebrequin généré par le capteur d'angle de vilebrequin à un point mort haut de compression dans le second cylindre ;

de régler un angle de vilebrequin absolu du moteur en fonction du signal de référence d'angle de vilebrequin et d'un signal venant du capteur d'angle de vilebrequin ; et

d'injecter le carburant dans la première quantité de carburant prédéterminée pour le premier cylindre, quand l'angle de vilebrequin absolu est égal à un angle de vilebrequin d'injection de carburant prédéterminé pour injecter le carburant dans la première quantité de carburant prédéterminée pour le premier second cylindre.

# FIG.1

# F I G . 2

START ~ 200

205
IS START INSTRUCTION SIGNAL (STA SIGNAL) GENERATED ? — NO

YES

210
TARGET THROTTLE VALVE OPENING AMOUNT TAtgt ← INITIAL OPENING AMOUNT TA0 (FULLY OPEN)

215
DISCRIMINATE CYLINDERS

220
SET ABSOLUTE CRANK ANGLE

225
SELECT FUEL PROPERTY DETERMINATION CYLINDER

230
TARGET THROTTLE VALVE OPENING AMOUNT TAtgt ← TA1 (<TA0)

235
ESTIMATE CYLINDER INTAKE AIR AMOUNT Mcm IN FUEL PROPERTY DETERMINATION CYLINDER

240
FUEL INJECTION AMOUNT TAUm FOR FUEL PROPERTY DETERMINATION CYLINDER ← f (Mcm)

245
IGNITION TIMING SAm FOR FUEL PROPERTY DETERMINATION CYLINDER ← g (Mcm)

250
DOES COMBUSTION END IN FUEL PROPERTY DETERMINATION CYLINDER ? — NO

YES

255
DETERMINE FUEL PROPERTY P BY COMBUSTION ANALYSIS FUEL PROPERTY DETERMINATION FLAG XH ← 1

260
TARGET THROTTLE VALVE OPENING AMOUNT TAtgt ← h(THW)

265
START-TIME FUEL INJECTION AMOUNT TAUSTA ← MapTAUSTA(P, THW)

270
START-TIME IGNITION TIMING STsta ← FIXED VALUE

RETURN ~ 295

# FIG.3

# FIG.4

START ~400

Pc1 ≥ Pcth AND Pc1 > Pc1old ? ~405 —NO→ C1 ← 0 ~420

↓YES

C1 ← C1+1 ~410

Pc1old ← Pc1 ~415

Pc2 ≥ Pcth AND Pc2 > Pc2old ? ~425 —NO→ C2 ← 0 ~440

↓YES

C2 ← C2+1 ~430

Pc2old ← Pc2 ~435

Pc3 ≥ Pcth AND Pc3 > Pc3old ? ~445 —NO→ C3 ← 0 ~460

↓YES

C3 ← C3+1 ~450

Pc3old ← Pc3 ~455

Pc4 ≥ Pcth AND Pc4 > Pc4old ? ~465 —NO→ C4 ← 0 ~480

↓YES

C4 ← C4+1 ~470

Pc4old ← Pc4 ~475

SELECT LARGEST VALUE COUNTER Cm AMONG C1 to C4 ~485

Cm ≥ Cth ? ~490 NO

↓YES

DETERMINE THAT PISTON IS IN COMPRESSION STROKE IN CYLINDER #m ~495

CYLINDER DISCRIMINATION FLAG XK ← 1 ~497

RETURN ~499

# F I G . 5

CYLINDER PRESSURE

Pcmax

Pcx=Pcm

Pcth

TIME

COUNTER Cx

Cth

t2

CYLINDER DISCRIMINATION
FLAG XK

0

1

t2'

ABSOLUTE CRANK ANGLE
DETERMINATION FLAG XCA

0

1

t3

# FIG.6

START 600

605
Pcm < Pcmold ?　　NO

YES

610
Pcm ← Pcmold

IDENTIFY LATEST PULSE OUTPUT
FROM CRANK ANGLE SENSOR AS
PULSE OUTPUT AT COMPRESSION
TOP DEAD CENTER IN CYLINDER #m　615

ABSOLUTE CRANK ANGLE
DETERMINATION FLAG XCA ← 1　620

RETURN 695

# FIG.7

START ~700

705

XCA = 1 ? —— NO

YES

715

IS CURRENT TIME POINT IMMEDIATELY AFTER TIME POINT AT WHICH XCA IS CHANGED FROM "0" TO "1" ? —— NO

YES

SET $\theta$ TO INITIAL VALUE CORRESPONDING TO CYLINDER #m
m = 1··· $\theta \leftarrow 0°$ CA
m = 3··· $\theta \leftarrow 180°$ CA
m = 4··· $\theta \leftarrow 360°$ CA
m = 2··· $\theta \leftarrow 540°$ CA ~720

$\theta \leftarrow \theta + 1°$ CA ~725

730

$\theta = 720°$ CA ? —— YES

NO

710

$\theta \leftarrow 0$

RETURN ~795

# F I G . 8

START — 800

805

$\theta = \theta 1$ ? — NO

YES

Pcm1 ← Pcm — 810

815

$\theta = \theta 2$ ? — NO

YES

Pcm2 ← Pcm — 820

$\Delta$Pcm ← Pcm2−Pcm1 — 825

830

**ESTIMATE CYLINDER INTAKE AIR AMOUNT Mcm IN FUEL PROPERTY DETERMINATION CYLINDER**
**Mcm ← MapMc($\Delta$Pcm)**

MapMc

Mcm

$\Delta$Pcm

RETURN — 895

# FIG.9

TOTAL GENERATED
HEAT AMOUNT Qsum
SUPPLIED
FUEL AMOUNT

$= \dfrac{Qsum}{TAUm}$

MapP

ALCOHOL CONCENTRATION P

# FIG.10

START-TIME FUEL
INJECTION AMOUNT
= TAUSTA

Map TAUSTA (THW, P)

THW LOW

ALCOHOL CONCENTRATION P

37

# FIG.11

START ~1100

```
205
START
DETERMINATION          NO
(IS STA SIGNAL
GENERATED?)
```

YES

1105

TARGET ISC VALVE
OPENING AMOUNT ← ISC0

1110

INJECT FUEL IN SMALL
AMOUNT (TAUsmall)

1115

ADVANCE IGNITION TIMING
RELATIVE TO MBT
(EXTREMELY ADVANCED
IGNITION TIMING)

215

DISCRIMINATE CYLINDERS

220

SET ABSOLUTE
CRANK ANGLE (XCA←1)

225

SELECT FUEL PROPERTY
DETERMINATION CYLINDER
(XK←1)

235

ESTIMATE CYLINDER
INTAKE AIR AMOUNT Mcm
IN FUEL PROPERTY
DETERMINATION CYLINDER

240

FUEL INJECTION AMOUNT
TAUm FOR FUEL PROPERTY
DETERMINATION CYLINDER
← f (Mcm)

245

IGNITION TIMING SAm FOR
FUEL PROPERTY
DETERMINATION CYLINDER
← g (Mcm)

```
250
DOES
COMBUSTION
END IN FUEL
PROPERTY               NO
DETERMINATION
CYLINDER
?
```

YES

255

DETERMINE FUEL
PROPERTY P BY
COMBUSTION ANALYSIS
(XH←1)

1120

TARGET ISC VALVE
OPENING AMOUNT
← ISC1 = ISC(THW)

265

START-TIME FUEL
INJECTION AMOUNT
TAUSTA
← i (P, THW)

270

START-TIME IGNITION
TIMING SAsta
← FIXED VALUE

RETURN ~1195

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1088153 A
- DE 3833123 A1
- US 5499607 A
- JP 9053503 A